# EUROPÄISCHE PATENTSCHRIFT

(11) **EP 2 964 382 B1**
(45) Veröffentlichungstag und Bekanntmachung des Hinweises auf die Patenterteilung: **24.07.2019**
(21) Anmeldenummer: 14720477.0
(22) Anmeldetag: 04.03.2014
(51) Int. Cl.: B01J 31/04, B01J 31/12, C09D 183/04, C09J 183/12, C08L 83/04, B01J 31/02

(54) **ZUSAMMENSETZUNG ZUR HERSTELLUNG VON SILICONKAUTSCHUKMASSEN**
CATALYST FOR THE CROSS-LINKING OF SILICON RUBBERS
CATALYSEUR POUR LA RÉTICULATION DE MASSES EN CAOUTCHOUC SILICONE

(30) Priorität: 04.03.2013 EP 13001089
(43) Veröffentlichungstag der Anmeldung: 13.01.2016
(73) Patentinhaber: Nitrochemie Aschau GmbH, 84544 Aschau (DE)
(72) Erfinder: PICHL, Ulrich, 84544 Aschau (DE); SCHMIDT, Gerhard, 84453 Mühldorf a. Inn (DE); EDERER, Theodor, 84539 Zangberg (DE); KNOTT, Thomas, 84453 Mühldorf (DE); BART, Karl-Christian, 84539 Ampfing (DE); LIPPSTREU, Jörg, 81679 München (DE)
(74) Vertreter: Lieck, Hans-Peter
(86) Internationale Anmeldenummer: PCT/EP2014/000538
(87) Internationale Veröffentlichungsnummer: WO 2014/135261

(56) Entgegenhaltungen:
- EP-A1- 2 030 976
- EP-A2- 2 280 041

## Beschreibung

Die vorliegende Erfindung betrifft eine Zusammensetzung zur Herstellung einer Siliconkautschukmasse mit einem Vernetzer auf Lactatbasis, wobei die Zusammensetzung einen Katalysator umfasst, der ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst. Darüber hinaus stellt die vorliegende Erfindung ein Verfahren zur Herstellung einer solchen Zusammensetzung bereit, sowie eine Verwendung des Katalysators zum Vernetzen einer Siliconkautschukmasse, insbesondere zum Vernetzen einer Siliconkautschukmasse mit einem Vernetzer auf Lactatbasis, sowie eine Verwendung der erfindungsgemäßen Zusammensetzung zur Herstellung einer Siliconkautschukmasse, insbesondere zur Verwendung als Dichtungsmittel, Klebstoff oder Beschichtungsmittel.

### Hintergrund der Erfindung

Kalthärtende Siliconkautschukmassen, auch RTV-(Raumtemperatur-vernetzende)-Siliconkautschukmassen genannt, sind schon lange als maßgeschneiderte Werkstoffe mit elastischen Eigenschaften bekannt. Sie werden allgemein als Dichtungsmassen oder Klebstoffe für Glas, Porzellan, Keramik, Stein, Kunststoffe, Metalle, Holz usw. eingesetzt, z.B. als Fugen- oder Dichtungsmassen im Bauwesen und im Sanitärbereich, oder als Beschichtungsmaterialien, z.B. in der Elektronikindustrie, (Römpp Chemie Lexikon, CD ROM, Version 2.0, Hrsg. J. Falbe, Thieme-Verlag, Stuttgart 1999 sowie Ullmanns Enzyklopädie der Technischen Chemie, 4. Auflage, Hrsg. E. Bartholome, Verlag Chemie, Weinheim 1982, Band 21, S. 511 ff.). Insbesondere werden Einkomponenten-RTV-Siliconkautschukmassen (RTV-1) eingesetzt; dabei handelt es sich beispielsweise um plastisch formbare Mischungen aus α,ω-Dihydroxypolyorganosiloxanen und geeigneten Vernetzern (die im Fachgebiet auch als Vernetzungsmittel oder Härter bezeichnet werden), die unter Feuchtigkeitsausschluß (z.B. in einer geeigneten Kartusche) aufbewahrt werden können, aber unter dem Einfluß von Wasser oder Luftfeuchtigkeit bei Raumtemperatur polymerisieren. Die Polymerisation erfolgt in der Regel durch die Kondensation von SiOH-Gruppen mit geeigneten hydrolysierbaren SiX-Gruppen der Vernetzer.

In Abhängigkeit von den gewünschten chemischen und physikalischen Eigenschaften des Polymerisationsproduktes, wie z.B. dem gewünschten Vernetzungsgrad, der Lösemittelresistenz usw., werden in der Regel verschiedene polyfunktionelle, z.B. tri- und/oder tetrafunktionelle, Vernetzer (Härter) zusammen mit verschiedenen difunktionellen oder mehrere funktionelle Gruppen tragenden Polyorganosiloxanverbindungen eingesetzt. Dabei werden besonders häufig α,ω-Dihydroxypolyorganosiloxane als difunktionelle Polyorganosiloxanverbindungen eingesetzt.

RTV-1-Siliconkautschukmassen werden anhand der bei der Hydrolyse des Vernetzers freigesetzten Austrittsgruppen (HX) in saure (HX = Säuren, wie z.B. Essigsäure, etc.), basische (z.B. HX = Amine, etc.) und neutrale (z.B. HX = Alkohole, Oxime, etc.) Systeme eingeteilt. Zur Zeit erhältliche RTV-1-Siliconkautschukmassen enthalten in der Regel sauer vernetzende Systeme, die unter Abgabe von Essigsäure hydrolysieren, oder neutral vernetzende Systeme, die unter Abgabe von Oximverbindungen, wie beispielsweise Butan-2-onoxim (bzw. Methyl-Ethyl-Ketoxim, MEKO) hydrolysieren.

Da saure RTV-1-Kautschukmassen, die bei der Vernetzung Essigsäure freisetzen, die als aggressive Verbindung z.B. Metalle, Stein oder Mörtel korrodieren oder zersetzen kann und überdies ein erhebliches Geruchsproblem mit sich bringt, werden für RTV-1-Siliconkautschukmassen zur Zeit vielfach neutralvernetzende Oximosilan-Vernetzer verwendet, die unter Abgabe von Oximverbindungen, wie beispielsweise Butan-2-onoxim (bzw. Methyl-Ethyl-Ketoxim, MEKO) hydrolysieren.

Nach neueren Erkenntnissen kann Butan-2-onoxim jedoch Krebs erzeugen, so dass eine weitere Verwendung von Butan-2-onoxim-abgebenden Verbindungen vom gesundheitlichen Standpunkt her grundsätzlich abzulehnen ist. Aus diesem Grunde muss Butan-2-onoxim seit 2004 mit dem R-Satz R40 ("Verdacht auf krebserzeugende Wirkung") gekennzeichnet werden. Entsprechend unterliegen auch Siliconkautschukmassen, die freies Butan-2-onoxim in einer bestimmte Grenzwerte überschreitenden Konzentration enthalten, dieser Kennzeichnungspflicht; diese Kennzeichnungspflicht umfasst besonders Siliconkautschukmassen, wie z.B. solche in Dichtstoffkartuschen, solange der Gehalt an freiem Butan-2-onoxim nicht kleiner als 1% ist (vgl. "Mischungsregel" der Zubereitungs-Richtlinie, s. Richtlinie 2006/8/EG der Kommission vom 23.01.2006, Amtsblatt der Europäischen Union vom 24.01.2006).

Praktisch alle der oben genannten üblichen Vernetzer haben den weiteren, auch gesundheitlichen Nachteil, daß die bei der Vernetzung freigesetzten Verbindungen übel, teilweise sehr übel riechen, was insbesondere bei der Verarbeitung in geschlossenen Räumen eine große Belästigung bedeutet.

Angesichts dieser Nachteile der üblichen Vernetzer haben die Erfinder der vorliegenden Erfindung zuvor einen neuen Vernetzer (Härter) auf Lactat-Basis, insbesondere auf Ethyllactat-Basis, erfunden, der einen ungiftigen und nicht unangenehm riechenden Vernetzer (Härter), der beim aushärten keine aggressiven Verbindungen freisetzt, bereitstellt. Dieser Vernetzer ist in EP 2 030 976 A1 ausführlich beschrieben.

Für den gewünschten breiten Anwendungsbereich der Siliconkautschukmassen sollten diese auf möglichst vielen Oberflächen haften, wie beispielsweise auf Holz, lackiertem Holz, lasiertem Holz, Metallen, wie Stahl, Aluminium, pulverbeschichtetem Aluminium, Glas, Kunststoffen, wie Polyvinylchlorid (PVC), Polyamid, Beton, etc. Weiterhin ist es wichtig, dass die Siliconkautschukmassen möglichst vollständig polymerisieren, um ein nachträgliches "Ausbluten" von unvollständig abreagierten Ausgangsstoffen etc. zu verhindern. Darüber hinaus sollten die Siliconkautschukmassen in einer üblichen Kartusche lagerbeständig sein, d.h. ihre Eigenschaften sollten sich nicht in Abhängigkeit von der Aufbewahrungszeit ändern, und das möglichst sowohl in einer nach der Befüllung abgeschlossenen Kartusche, als auch in einer bereits geöffneten und/oder teilweise entleerten Kartusche. Schließlich sollte das Polymerisationsprodukt nach abgeschlossener Vernetzung (Härtung) der Siliconkautschukmasse transparent bzw. klar sein.

Neben der geeigneten Auswahl der eigentlichen Polymerkomponenten, wie Härter und Polyorganosiloxan, werden zur Kontrolle von Polymerisationsgeschwindigkeit und/oder Polymerisationsgrad in der Regel ein Katalysator beigefügt, durch den wichtige Produkteigenschaften der Siliconkautschukmassen beeinflusst werden, wie z.B. die Hautbildungszeit (d.h. die Zeit, in der sich auf einer ausgebrachten Masse eine erste vollständige Haut bildet), die Klebfreizeit (d.h. die Zeit, nach der die Masse keine Klebrigkeit mehr aufweist), die Durchhärtung (d.h. die Zeit, in der die Polymerisation abgeschlossen ist), usw. Beispielsweise werden als Eigenschaften für gewerbliche Silicondichtstoffe eine Hautbildungszeit von 5 bis 15 Minuten, eine Klebfreizeit von 15 bis 120 Minuten und eine Durchhärtung von maximal 7 Tagen bei einer Applikation mit einer Höhe von 10 mm gefordert. Weitere Informationen zu Hautbildungszeit, Klebfreizeit und Durchhärtung können beispielsweise dem "Praxishandbuch Dichtstoffe" (3. Auflage/1990) entnommen werden, das vom Industrieverband Dichtstoffe e.V. (IVD) herausgegeben wurde.

Als Katalysator für Siliconkautschukmassen wurde bisher ein metallorganischer Katalysator verwendet, wie er üblicherweise für kondensationsvernetzende Polysiloxane eingesetzt wird, insbesondere ein Katalysator auf Basis einer zinnorganischen Verbindung, wie beispielsweise einem Alkyl-zinn-carboxylat, insbesondere Dibutylzinndilaurat und Dioctylzinn-dilaurat. Solche Katalysatoren werden in der EP2030976 beschrieben. Derartige zinnorganische Verbindungen weisen jedoch toxikologische Eigenschaften auf, die zur Einschränkung ihrer Verwendung in kommerziell erhältlichen Produkten geführt hat (s. EU-Richtlinie 76/769/EWG vom 28.05.2009).

Ersatzweise wurde im Stand der Technik bisher ein anderer Katalysator, der keine zinnorganische Verbindung umfasst, für die Vernetzung von Polysiloxanen verwendet.

Beispielsweise kann eine Titan-basierte Verbindungen als Katalysator verwendet werden, wie z.B. in EP 1 230 298 A1 und EP 2 290 007 A1 beschrieben wird. Allerdings ist bekannt, dass ein Katalysator auf Basis einer Titanverbindung zu Gelbfärbungen und/oder Oberflächenklebrigkeit in den Produkten führen kann, sowie eine langsame Vulkanisationsgeschwindigkeit, eine mangelnde Lagerungsstabilität und eine Unverträglichkeit mit gängigen Haftvermittlern auf Aminosilanbasis aufweist.

Weiterhin beschreibt EP 1 230 298 A1 einen Katalysator auf Basis von Aminen und Metallsalzen von Zinn, Zink, Eisen, Blei, Barium und Zirkonium sowie auf Basis von Chelaten von Zinn. Dieser Katalysator führt zu Produkten mit einer geringen Gelbfärbung, ist jedoch laut EP 2 290 007 A1 ein langsamer Katalysator.

Deshalb schlägt EP 2 290 007 A1 einen Katalysator auf Basis von Metallverbindungen der I. und II. Haupt- und Nebengruppen, d.h. Li, Na, K, Rb, Cs, Be, Mg, Ca, Sr, Ba, Cu, Ag, Au, Zn, Cd und Hg, in Form von reinen Carboxylaten vor, die bei Zugabe eines sauren Co-Katalysators in Form einer organischen oder anorganischen Säure ein Produkt mit akzeptablen Härtungsverlauf ergeben. EP 2 290 007 A1 beschreibt die Verwendung dieses Katalysators in Siliconkautschukmassen mit Vernetzern die bei der Hydrolyse saure (Essigsäure) bzw. neutrale (Alkohole bzw. MEKO) Verbindungen abgeben, insbesondere unter Verwendung eines Katalysators aus einem Li- Carboxylat bzw. aus einem Sr-Carboxylat.

Die Verwendung eines Katalysators auf Basis von Li-, Na-, K-, Mg-, Ca-, Sr-Verbindungen ohne zusätzliche gleichzeitige Verwendung von einem sauren Co-Katalysator wird in EP 2 280 041 A1 beschrieben. Dort wird weiter beschrieben, dass insbesondere die Verwendung von Octasoligem Lithium oder Octosoligem Strontium in Kombination mit Alkoxy-, Acetoxy- oder Oximo-RTV-1 Produkte mit gewünschten Eigenschaften ergeben.

### Aufgabe der Erfindung

Die Erfinder der vorliegenden Erfindung haben allerdings gefunden, dass die oben beschriebenen bekannten Katalysatoren in Kombination mit einem Vernetzer (Härter) auf Lactat-Basis keine Produkte (RTV-1) mit gewünschten Eigenschaften ergeben. So wurde gefunden, dass die mit den bekannten Zinn-freien Katalysatoren hergestellten Dichtstoffmassen eine mangelhafte Haftung auf vielen Untergründen (Substraten), sowie eine mangelhafte Durchhärtung und eine ungenügende Lagerstabilität aufweisen. Insbesondere mit Lithium-haltigen Katalysatoren wurde bei Lagerung ein Vergilben der Dichtstoffmassen beobachtet.

Daher ist es eine Aufgabe der vorliegenden Erfindung, einen Katalysator für Siliconkautschukmassen, insbesondere für solche, die einen Vernetzer auf Lactatbasis enthalten, bereitzustellen, der es erlaubt, die zahlreichen, insbesondere toxikologischen, Vorteile der Lactat-Vernetzer auszunutzen, und gleichzeitig selbst keine Toxizität besitzt, wie beispielsweise Katalysatoren auf Basis von Zinn-organischen Verbindungen.

Es ist bekannt, dass in hochgradig optimierten Systemen, wie es Siliconkautschukmassen sind, schon geringfügige Änderungen das System stören und zur Verschlechterung der Gesamtheit der optimierten Eigenschaften führen können. Es ist deshalb eine Aufgabe der Erfindung, einen verbesserten Katalysator für Siliconkautschukmassen mit Lactatvernetzern bereitzustellen, der alle für-RTV-1 gewünschten Eigenschaften bereitstellt, aber bei dem die dem Stand der Technik eigenen Nachteile nicht auftreten.

Die Aufgabe der Erfindung wird durch den Gegenstand der unabhängigen Ansprüche gelöst. Bevorzugte Ausführungsformen sind Gegenstand der abhängigen Ansprüche.

### Kurze Beschreibung der Erfindung

Zur Lösung der oben beschriebenen Aufgabe stellt die vorliegende Erfindung bereit: eine Zusammensetzung zur Herstellung einer Siliconkautschukmasse mit einem Vernetzer auf Lactatbasis, wobei die Zusammensetzung einen Katalysator umfasst, der ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst; ein Verfahren zur Herstellung einer solchen Zusammensetzung; eine Verwendung des Katalysators zum Vernetzen einer Siliconkautschukmasse, insbesondere zum Vernetzen einer Siliconkautschukmasse mit einem Vernetzer auf Lactatbasis; sowie eine Verwendung der erfindungsgemäßen Zusammensetzung zur Herstellung einer Siliconkautschukmasse, insbesondere zur Verwendung als Dichtungsmittel, Klebstoff oder Beschichtungsmittel.

Insbesondere stellt die vorliegende Erfindung die folgenden Mittel bereit:
(1) Eine Zusammensetzung, die
   mindestens eine Organosiliconverbindung,
   mindestens einen Vernetzer auf Basis einer Silanverbindung mit Lactatgruppen, und einen Katalysator umfasst, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.
(2) Eine Zusammensetzung, wie oben unter (1) beschrieben, die dadurch gekennzeichnet ist, dass das Verhältnis der Anzahl der Zinkatome des Zinksalzes einer Carbonsäure zu der Anzahl der Metallatome des Metallsalzes einer Carbonsäure von 2:1 bis 1:2 beträgt, vorzugsweise von 1,3:1 bis 1:1,3.
(3) Eine Zusammensetzung, wie oben unter (1) oder (2) beschrieben, die dadurch gekennzeichnet ist, dass sie mindestens ein Metallsalz einer Carbonsäure umfasst, das aus Bismut-tris(2-ethylhexanoat), Calcium-bis(2-ethylhexanoat), Natrium(2-Ethylhexanoat) und Zink-bis(2-ethylhexanoat) ausgewählt wird.
(4) Eine Zusammensetzung, wie oben unter (1) bis (3) beschrieben, die dadurch gekennzeichnet ist, dass sie Calcium-bis(2-ethylhexanoat) und Zink-bis(2-ethylhexanoat) umfasst, vorzugsweise in einem Zahlenverhältnis von 1,3:1 bis 1:1,3.
(5) Eine Zusammensetzung, wie oben unter (1) bis (3) beschrieben, die dadurch gekennzeichnet ist, dass sie Bismut-tris(2-ethylhexanoat)und Zink-bis(2-ethylhexanoat) umfasst, vorzugsweise in einem Zahlenverhältnis von 1,3:1 bis 1:1,3 umfasst.
(6) Eine Zusammensetzung, wie oben unter (1) bis (3) beschrieben, die dadurch gekennzeichnet ist, dass sie Natrium(2-ethylhexanoat)und Zink-bis(2-ethylhexanoat) umfasst, vorzugsweise in einem Zahlenverhältnis von 1,3:1 bis 1:1,3 umfasst.
(7) Eine Zusammensetzung, wie oben unter (1) bis (6) beschrieben, die dadurch gekennzeichnet ist, dass sie zusätzlich einen Co-Katalysator umfasst, der aus einer basischen Verbindung ausgewählt wird, insbesondere Triethylamin.
(8) Eine Zusammensetzung, wie oben unter (1) bis (7) beschrieben, die dadurch gekennzeichnet ist, dass die mindestens eine Organosiliconverbindung und der mindestens eine Vernetzer auf Basis einer Silanverbindung mit Lactatgruppen vor dem Mischen mit dem Katalysator miteinander gemischt und zur Reaktion gebracht worden sind.
(9) Eine Zusammensetzung, wie oben unter (8) beschrieben, die dadurch gekennzeichnet ist, dass die mindestens eine Organosiliconverbindung und der mindestens eine Vernetzer auf Basis einer Silanverbindung mit Lactatgruppen miteinander unter Zugabe eines ersten Katalysators, der aus einer sauren Verbindung, insbesondere mindestens einem 2-Ethylhexylphosphat, ausgewählt wird, gemischt und zur Reaktion gebracht worden sind, und die so erhaltene Zusammensetzung vor dem Mischen mit dem Katalysator durch Zugabe einer basischen Verbindung, bevorzugt Triethylamin, neutralisiert worden ist.
(10) Eine Zusammensetzung, wie oben unter (1) bis (9) beschrieben, die dadurch gekennzeichnet ist, dass die Organosiliconverbindung eine α,ω-dihydroxyl-terminierte Polyorganosiloxanverbindung ist, insbesondere ein α,ω-dihydroxyl-terminiertes Polydialkylsiloxan.
(11) Eine Zusammensetzung, wie oben unter (1) bis (10) beschrieben, die dadurch gekennzeichnet ist, dass der Vernetzer mindestens eine Verbindung umfasst, die aus der Gruppe ausgewählt wird, die aus Methyl-tris(ethyllactato)silan, Ethyl-tris(ethyllactato)silan, Phenyl-tris(ethyllactato)silan, Vinyl-tris(ethyllactato)silan und Tetra(ethyllactato)silan besteht.
(12) Eine Zusammensetzung, wie oben unter (1) bis (11) beschrieben, die dadurch gekennzeichnet ist, dass sie 40 bis 90 Gew.-% der Organosiliconverbindung, 1 bis 15 Gew.-% des Härters, und 0,1 bis 5,0 Gew.-% des Katalysators umfasst.
(13) Ein Verfahren zur Herstellung einer Zusammensetzung, wie oben unter (1) bis (12) beschrieben, das dadurch gekennzeichnet ist, dass in einem ersten Schritt mindestens eine Organosiliconverbindung und mindestens ein Vernetzer auf Basis einer Silanverbindung mit Lactatgruppen miteinander gemischt und zur Reaktion gebracht werden, vorzugsweise unter Zugabe eines ersten Katalysators, der aus einer sauren Verbindung, insbesondere mindestens einem 2-Ethylhexylphosphat, ausgewählt wird, bevor die so erhaltene Zusammensetzung in einem folgenden Schritt mit einem Katalysator gemischt wird, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.
(14) Ein Verfahren wie unter (13) beschrieben, dadurch gekennzeichnet, dass die Zusammensetzung, die durch Reaktion der mindestens einen Organosiliconverbindung und des mindestens einen Vernetzers auf Basis einer Silanverbindung mit Lactatgruppen unter Zugabe eines ersten Katalysators erhalten wird, vor dem Mischen mit dem Katalysator durch Zugabe einer basischen Verbindung, bevorzugt Triethylamin, neutralisiert wird.
(15) Eine Verwendung einer oben unter (1) bis (12) beschriebenen Zusammensetzung als Dichtungsmittel, Klebstoff oder Beschichtungsmittel.
(16) Eine Verwendung eines Katalysators zum Vernetzen einer Siliconkautschukmasse, insbesondere zum Vernetzen einer Siliconkautschukmasse mit Lactat-Vernetzer, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.
(17) Eine Verwendung, wie oben unter (16) beschrieben, dadurch gekennzeichnet, dass das Verhältnis der Anzahl der Zinkatome des Zinksalzes einer Carbonsäure zu der Anzahl der Metallatome des Metallsalzes einer Carbonsäure von 2:1 bis 1:2 beträgt, vorzugsweise von 1,3:1 bis 1:1,3.
(18) Eine Verwendung, wie oben unter (16) oder (17) beschrieben, dadurch gekennzeichnet, dass der Katalysator mindestens ein Metallsalz einer Carbonsäure umfasst, das aus Bismut-tris(2-ethylhexanoat), Calcium-bis(2-ethylhexanoat), Natrium(2-ethylhexanoat) und Zink-bis(2-ethylhexanoat) ausgewählt wird.
(19) Eine Verwendung, wie oben unter (16) bis (18) beschrieben, dadurch gekennzeichnet, dass der Katalysator Calcium-bis(2-ethylhexanoat) und Zink-bis(2-ethylhexanoat) umfasst, vorzugsweise in einem Zahlenverhältnis von 1,3:1 bis 1:1,3 umfasst.
(20) Eine Verwendung, wie oben unter (16) bis (18) beschrieben, dadurch gekennzeichnet, dass der Katalysator Bismut-tris(2-ethylhexanoat) und Zink-bis(2-ethylhexanoat) umfasst, vorzugsweise in einem Zahlenverhältnis von 1,3:1 bis 1:1,3 umfasst.
(21) Eine Verwendung, wie oben unter (16) bis (18) beschrieben, dadurch gekennzeichnet, dass der Katalysator Natrium(2-ethylhexanoat) und Zink-bis(2-ethylhexanoat) umfasst, vorzugsweise in einem Zahlenverhältnis von 1,3:1 bis 1:1,3 umfasst.
(22) Eine Verwendung, wie oben unter (16) bis (21) beschrieben, dadurch gekennzeichnet, dass zusätzlich ein Co-Katalysator verwendet wird, der aus einer basischen Verbindung, insbesondere Triethylamin, ausgewählt wird.
(23) Eine Verwendung, wie oben unter (16) bis (22) beschrieben, dadurch gekennzeichnet, dass die mindestens eine Organosiliconverbindung und der mindestens eine Vernetzer auf Basis einer Silanverbindung mit Lactatgruppen vor dem Mischen mit dem Katalysator miteinander gemischt und zur Reaktion gebracht worden sind.
(24) Eine Verwendung, wie oben unter (23) beschrieben, dadurch gekennzeichnet, dass die mindestens eine Organosiliconverbindung und der mindestens eine Vernetzer auf Basis einer Silanverbindung mit Lactatgruppen miteinander unter Zugabe eines ersten Katalysators, der aus einer sauren Verbindung, insbesondere mindestens einem 2-Ethylhexylphosphat, ausgewählt wird, gemischt und zur Reaktion gebracht worden sind, und die so erhaltene Zusammensetzung vor dem Mischen mit dem Katalysator durch Zugabe einer basischen Verbindung, bevorzugt Triethylamin, neutralisiert worden ist.
(25) Eine Verwendung, wie oben unter (16) bis (24) beschrieben, dadurch gekennzeichnet, dass die Organosiliconverbindung eine α,ω-dihydroxyl-terminierte Polyorganosiloxanverbindung ist, insbesondere ein α,ω-dihydroxyl-terminiertes Polydialkylsiloxan.
(26) Eine Verwendung, wie oben unter (16) bis (25) beschrieben, dadurch gekennzeichnet, dass der Vernetzer mindestens eine Verbindung umfasst, die aus der Gruppe ausgewählt wird, die aus Methyl-tris(ethyllactato)silan, Ethyl-tris(ethyllactato)silan, Phenyl-tris(ethyllactato)silan, Vinyl-tris(ethyllactato)silan und Tetra(ethyllactato)silan besteht.
(27) Eine Verwendung, wie oben unter (16) bis (26) beschrieben, dadurch gekennzeichnet, dass 40 bis 90 Gew.-% der Organosiliconverbindung, 1 bis 15 Gew.-% des Vernetzers, und 0,1 bis 5,0 Gew.-% des Katalysators verwendet werden.

### Detaillierte Beschreibung der Erfindung

Die vorliegende Erfinung stellt eine Zusammensetzung zur Herstellung einer Siliconkautschukmasse mit einem Vernetzer auf Lactatbasis bereit, wobei die Zusammensetzung mindestens eine Organosiliconverbindung, mindestens einen Vernetzer auf Basis einer Silanverbindung mit Lactatgruppen, und einen Katalysator umfasst, insbesondere einen Katalysator für die Vernetzung von Siliconkautschukmassen mit einem Vernetzer auf Lactatbasis, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst. Die erfindungsgemäße Zusammensetzung kann zur Herstellung einer Siliconkautschukmasse verwendet werden, insbesondere zur Herstellung einer Siliconkautschukmasse mit einem Vernetzer auf Lactatbasis.

Die vorliegende Erfindung verwendet einen Katalysator für die Vernetzung von Siliconkautschukmassen mit einem Vernetzer (Härter) auf Basis einer Silanverbindung mit Lactatgruppen. Der Katalysator, der in der erfindungsgemäßen Zusammensetzung enthalten ist bzw. in der erfindungsgemäßen Verwendung verwendet wird, umfasst ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird.

Der Katalysator, der in der erfindungsgemäßen Zusammensetzung enthalten ist bzw. in der erfindungsgemäßen Verwendung verwendet wird, ist somit eine Mischung aus mindestens zwei voneinander verschiedenen Verbindungen, vorzugsweise aus zwei bis zwanzig voneinander verschiedenen Verbindungen, weiter bevorzugt aus zwei bis acht voneinander verschiedenen Verbindungen, und besonders bevorzugt aus zwei oder drei voneinander verschiedenen Verbindungen.

Besonders bevorzugt umfasst der Katalysator genau zwei voneinander verschiedene Metallsalze von Carbonsäuren. Besonders bevorzugt sind die beiden Metallsalze der Carbonsäuren in dem Katalysator in einem Verhältnis der Anzahlen der jeweiligen Metallatome (Zahlenverhältnis) von 2:1 bis 1:2, weiter bevorzugt von 1,3:1 bis 1:1,3, weiter bevorzugt von 5:4 bis 4:5, weiter bevorzugt von 1,2:1 bis 1:1,2, noch weiter bevorzugt von 1,1:1 bis 1:1,1, und besonders bevorzugt von etwa 1:1 umfasst.

Jede einzelne dieser in dem Katalysator umfassten Verbindungen ist ein Metallsalz einer oder mehrerer Carbonsäuren.

Der Begriff "Carbonsäure" bezeichnet dabei eine organische Verbindung, vorzugsweise einen Kohlenwasserstoff, mit mindestens einer Carboxylgruppe -COOH. Bevorzugt umfasst eine Carbonsäure einen Kohlenwasserstoff, der von 1 bis 25 Kohlenstoffatome umfasst, vorzugsweise von 5 bis 20 Kohlenstoffatome, und besonders bevorzugt von 6 bis 19 Kohlenstoffatome. Der Kohlenwasserstoff der Carbonsäure kann gesättigt, ungesättigt oder aromatisch sein, oder entsprechende Bindungen umfassen. Der Kohlenwasserstoff der Carbonsäure kann eine geradkettige oder verzweigte Kohlenwasserstoffkette umfassen, und/oder Ringe aus Kohlenwasserstoffen und/oder geeigneten Heteroatomen. Bevorzugt umfasst die Carbonsäure einen gesättigten Kohlenwasserstoff (Alkan), der eine geradkettige oder verzweigte Kohlenwasserstoffkette umfasst. Die Carbonsäure kann eine oder mehrere Carboxylgruppen umfassen, vorzugsweise eine, zwei oder drei Carboxylgruppen. Besonders bevorzugt sind Monocarbonsäuren und Dicarbonsäure. In besonders bevorzugten Dicarbonsäuren sind die zwei Carboxylgruppen an benachbarte Kohlenstoffatome gebunden. Ganz besonders bevorzugt sind Monocarbonsäuren.
Eine besonders bevorzugte Carbonsäure ist 2-Ethylhexansäure.

Ein "Metallsalz einer Carbonsäure" im Sinne dieser Erfindung ist eine Verbindung, die mindestens ein Carboxylatanion und mindestens ein Metallkation umfasst. Als Carboxilatanion wird dabei das Anion bezeichnet, das durch Deprotonierung einer Carboxylgruppe einer Carbonsäure gebildet wird. Somit ist ein Carboxylatanion im Sinne dieser Erfindung eine organische Verbindung, vorzugsweise ein Kohlenwasserstoff, mit mindestens einer Carboxylatgruppe -COO⁻, die aus jeder der oben beschriebenen Carbonsäuren gebildet werden kann. Das Metallkation ist ein Kation des jeweiligen Metalls, vorzugsweise in einer unter den Bedingungen der Anwendung stabilen Oxidationsstufe. Entsprechend weist das Metallkation vorzugsweise eine positive Ladung von +1 bis +4 auf, weiter bevorzugt von +1 oder +2 oder +3. Beispiele für ein einwertiges Metallkation (Ladung +1) sind K⁺, Li⁺ und Na⁺. Beispiele für ein zweiwertiges Metallkation (Ladung +2) sind Ca²⁺, Mg²⁺, und Zn²⁺, und ein Beispiel für ein dreiwertiges Metallkation (Ladung +3) ist Bi³⁺. Für eine ladungsneutrale Verbindung kann die Ladung des Metallkations durch die Anzahl der einwertig negativ geladenen Carboxylatgruppen ausgeglichen werden, so dass das Verhältnis von Metallkation zu Carboxylatgruppe in dem Metallsalz je nach Ladung des Metallkations 1:1, 1:2, 1:3 usw., bis zur maximalen Ladung, betragen kann. Beispielsweise entspricht im Fall von Monocarbonsäuren das Verhältnis von Metall zu Carbonsäure bei einwertigen Metallkationen 1:1, bei zweiwertigen Metallkationen 1:2, bei dreiwertigen Metallkationen 1:3, usw. Bei Dicarbonsäuren mit zwei Carboxylatgruppen wird das Verhältnis entsprechend angepasst, so dass beispielsweise bei zweiwertigen Metallkationen das Verhältnis von Metall zu Dicarboxylat 1:1 betragen kann, usw. Das Metallsalz kann Carboxylatanionen einer einzigen Carbonsäure enthalten, oder Carboxylatanionen mehrerer voneinander verschiedener Carbonsäuren. Beispielsweise kann das Matallsalz eines zweiwertigen Metallkations ein Carboxylatanion einer ersten Carbonsäure (R¹-COO⁻) und ein Carboxylatanion einer davon verschiedenen zweiten Carbonsäure (R²-COO⁻) enthalten. Neben Metallkation und Carboxylatanion(en) kann das Metallsalz einer Carbonsäure auch weitere Bestandteile umfassen, wie beispielsweise andere Anionen, die keine Carboxylatanionen sind, z.B. Halogenidanionen, Nitratanionen, Sulfatanionen oder dergleichen, oder neutrale Moleküle, z.B. Solvatmoleküle, oder dergleichen.

Besonders bevorzugt sind die Metallsalze der Carbonsäuren in dem Katalysator in einem Verhältnis der Anzahlen der jeweiligen Metallatome (Zahlenverhältnis) von 2:1 bis 1:2, weiter bevorzugt von 1,3:1 bis 1:1,3, weiter bevorzugt von 5:4 bis 4:5, weiter bevorzugt von 1,2:1 bis 1:1,2, noch weiter bevorzugt von 1,1:1 bis 1:1,1, und besonders bevorzugt von etwa 1:1 umfasst.

Es wurde überraschend gefunden, dass ein Katalysator für die Vernetzung von Siliconkautschukmassen, der mindestens zwei voneinander verschiedene Metallsalze von Carbonsäuren gemäß der zuvor gegebenen Definition umfasst, bei der Herstellung von RTV-1 unter Verwendung von einem Vernetzer auf Lactatbasis besonders vorteilhafte Produkteigenschaften bedingt. Dieser Katalysator ermöglicht somit vorteilhaft die Herstellung von RTV-1 Siliconkautschukmassen, die einen Vernetzer auf Lactatbasis enthalten und die zahlreichen, insbesondere toxikologischen, Vorteile der Lactat-Vernetzer auszunutzen.

Darüber hinaus wurde überraschend gefunden, dass die mit diesem Katalysator hergestellten Dichtmassen gegenüber den bekannten mit zinnhaltigem Katalysator eine vorteilhaft schnellere Hautbildungszeit und Klebfreizeit aufweisen. Außerdem zeigen sie eine höhere Transparenz nach dem Aushärten. Neben den vorteilhaften toxischen Eigenschaften, ist der angenehme Geruch der Lactatvernetzer ein weiterer genereller Vorteil der erfindungsgemäßen Zusammensetzungen.

Es wurde gefunden, dass Mischungen, die ein Bi-, Ca-, K-, Li-, Mg, Na-, und/oder Zn-Kation umfassen, Produkte mit besonders vorteilhaften Eigenschaften bereitstellen. Weiter bevorzugt sind Mischungen von Carbonsäuresalzen, die ein Bi-, Ca-, K-, Li-, Mg, Na-, und/oder Zn-Kation umfassen, weiter bevorzugt Mischungen, die ein Bi-, Ca-, Na-, und/oder Zn-Kation umfassen, und besonders bevorzugt Mischungen, die ein Bi-, Ca-, und/oder Zn-Kation umfassen.

Der Katalysator, der in der erfindungsgemäßen Zusammensetzung enthalten ist bzw. in der erfindungsgemäßen Verwendung verwendet wird, umfasst ein Metallsalz einer Carbonsäure, das ein oder mehrere Carbonsäureanionen umfasst, die aus Anionen von gesättigten Carbonsäuren mit sechs bis neunzehn Kohlenstoffatomen ausgewählt werden, wobei die Carbonsäure eine verzweigte Kohlenwasserstoffkette umfasst.

Es wurde gefunden, dass so Produkte mit besonders vorteilhaften Eigenschaften bereitgestellt werden können. Weiter bevorzugt sind Anionen von gesättigten Carbonsäuren mit sechs bis zehn Kohlenstoffatomen.

Besonders bevorzugt sind Anionen einer Carbonsäure mit einer verzweigten Kohlenwasserstoffkette aus acht Kohlenstoffatomen. Eine besonders bevorzugte Ausführungsform einer Carbonsäure ist 2-Ethyl-Hexansäure.

Der Katalysator, der in der erfindungsgemäßen Zusammensetzung enthalten ist bzw. in der erfindungsgemäßen Verwendung verwendet wird, umfasst ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird.

Besonders bevorzugt sind die Metallsalze der Carbonsäuren in dem Katalysator in einem Verhältnis der Anzahl der Zinkatome des Zinksalzes einer Carbonsäure zu der Anzahl der Metallatome des Metallsalzes einer Carbonsäure (Zahlenverhältnis) von 2:1 bis 1:2, weiter bevorzugt von 1,3:1 bis 1:1,3, weiter bevorzugt von 5:4 bis 4:5, weiter bevorzugt von 1,2:1 bis 1:1,2, noch weiter bevorzugt von 1,1:1 bis 1:1,1, und besonders bevorzugt von etwa 1:1 umfasst.

Es wurde gefunden, dass so Produkte mit besonders vorteilhaften Eigenschaften bereitgestellt werden können.

Weiter bevorzugt umfasst der Katalysator, der in der erfindungsgemäßen Zusammensetzung enthalten ist bzw. in der erfindungsgemäßen Verwendung verwendet wird, ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz und einem Calciumsalz jeweils einer oder mehrerer verzweigten gesättigten Carbonsäuren mit sechs bis neunzehn Kohlenstoffatomen ausgewählt wird, umfasst. Besonders bevorzugt umfasst der Katalysator ein Zinksalz einer verzweigten Carbonsäure mit sechs bis zehn Kohlenstoffatomen in Kombination mit einem Bismutsalz einer verzweigten Carbonsäure mit sechs bis zehn Kohlenstoffatomen und/oder einem Calciumsalz einer verzweigten Carbonsäure mit sechs bis zehn Kohlenstoffatomen. In einer besonders bevorzugten Ausführungsform umfasst der Katalysator ein Zinksalz einer verzweigten Carbonsäure mit acht Kohlenstoffatomen in Kombination mit einem Bismutsalz einer verzweigten Carbonsäure mit acht Kohlenstoffatomen und/oder einem Calciumsalz einer verzweigten Carbonsäure mit acht Kohlenstoffatomen.

Besonders bevorzugt umfasst der Katalysator, der in der erfindungsgemäßen Zusammensetzung enthalten ist bzw. in der erfindungsgemäßen Verwendung verwendet wird, Zink-bis(2-ethylhexanoat).

Es wurde gefunden, dass mit Zink-bis(2-ethylhexanoat) Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, Bismut-tris(2-ethylhexanoat).

Es wurde gefunden, dass mit Bismut-tris(2-ethylhexanoat) Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, Calcium-bis(2-ethylhexanoat).

Es wurde gefunden, dass mit Calcium-bis(2-ethylhexanoat) Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, Natrium(2-ethylhexanoat).

Es wurde gefunden, dass mit Natrium(2-ethylhexanoat) Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, eine Mischung aus Calcium-bis(2-ethylhexanoat) und Zink-bis(2-ethylhexanoat).

Besonders bevorzugt umfasst der Katalysator eine Mischung aus Calcium-bis(2-ethylhexanoat) und Zink-bis(2-ethylhexanoat) in einem Verhältnis von 1:1 bis 1:3 (Gewichtsverhältnis), weiter bevorzugt in einem Verhältnis von 1:1 bis 1:2, und besonders bevorzugt 4:5.

Dies entspricht einem Zahlenverhältnis von Calcium-bis(2-ethylhexanoat) zu Zink-bis(2-ethylhexanoat) von etwa 1,1:1 bis 1:2,8, bevorzugt von etwa 1,1:1 bis 1:1,9, und besonders bevorzugt von etwa 1:1,2.

Es wurde gefunden, dass mit einem Katalysator, der Calcium-bis(2-ethylhexanoat) und Zink-bis(2-ethylhexanoat), vorzugsweise im Verhältnis von 1:1 bis 1:3 (Gewichtsverhältnis), umfasst, Produkte mit besonders vorteilhaften Eigenschaften bereitgestellt werden können.

Es wurde gefunden, dass mit einem Katalysator, der Calcium-bis(2-ethylhexanoat) und Zink-bis(2-ethylhexanoat), vorzugsweise im Verhältnis von gerundet 1:1, insbesondere von etwa 1,3:1 bis 1:1,3 (Zahlenverhältnisse), umfasst, Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, eine Mischung aus Natrium(2-ethylhexanoat) und Zink-bis(2-ethylhexanoat).

Besonders bevorzugt umfasst der Katalysator eine Mischung aus Natrium(2-ethylhexanoat) und Zink-bis(2-ethylhexanoat) in einem Verhältnis von 4:1 bis 1:4 (Gewichtsverhältnis), weiter bevorzugt in einem Verhältnis von 1:1 bis 1:3, und besonders bevorzugt 1:2.

Dies entspricht einem Zahlenverhältnis von Natrium(2-ethylhexanoat) zu Zink-bis(2-ethylhexanoat) von etwa 8,5:1 bis 1:1,9, bevorzugt von etwa 2,1:1 bis 1:1,4, und besonders bevorzugt von etwa 1:1,1.

Es wurde gefunden, dass mit einem Katalysator, der Natrium(2-ethylhexanoat) und Zink-bis(2-ethylhexanoat), vorzugsweise im Verhältnis von 4:1 bis 1:4 (Gewichtsverhältnis), umfasst, Produkte mit besonders vorteilhaften Eigenschaften bereitgestellt werden können. Es wurde gefunden, dass mit einem Katalysator, der Natrium(2-ethylhexanoat) und Zink-bis(2-ethylhexanoat), vorzugsweise im Verhältnis von gerundet 1:1, insbesondere von etwa 1,3:1 bis 1:1,3 (Zahlenverhältnisse), umfasst, Produkte mit besonders vorteilhaften Eigenschaften bereitgestellt werden können.

Besonders bevorzugt umfasst der Katalysator, der in der erfindungsgemäßen Zusammensetzung enthalten ist bzw. in der erfindungsgemäßen Verwendung verwendet wird, eine Mischung aus Bismut-tris(2-ethylhexanoat) und Zink-bis(2-ethylhexanoat).

Besonders bevorzugt umfasst der Katalysator eine Mischung aus Bismut-tris(2-ethylhexanoat) und Zink-bis(2-ethylhexanoat) in einem Verhältnis von 4:1 bis 1:4 (Gewichtsverhältnis), weiter bevorzugt in einem Verhältnis von 2:1 bis 3:1, und besonders bevorzugt von 7:3.

Dies entspricht einem Zahlenverhältnis von Bismut-tris(2-ethylhexanoat) zu Zink-bis(2-ethylhexanoat) von etwa 2,2:1 bis 1:7,3, bevorzugt von etwa 1,1:1 bis 1:1,7, und besonder bevorzugt von etwa 1,3:1.

Es wurde gefunden, dass mit einem Katalysator, der Bismut-tris(2-ethylhexanoat) und Zink-bis(2-ethylhexanoat), vorzugsweise im Verhältnis von 4:1 bis 1:4 (Gewichtsverhältnis), umfasst, Produkte mit besonders vorteilhaften Eigenschaften bereitgestellt werden können.

Es wurde gefunden, dass mit einem Katalysator, der Bismut-tris(2-ethylhexanoat) und Zink-bis(2-ethylhexanoat), vorzugsweise im Verhältnis von gerundet 1:1, insbesondere von etwa 1,3:1 bis 1:1,3 (Zahlenverhältnisse), umfasst, Produkte mit besonders vorteilhaften Eigenschaften bereitgestellt werden können.

Besonders bevorzugt umfasst die erfindungsgemäße Zusammensetzung zusätzlich einen Co-Katalysator. Weiter bevorzugt ist der Co-Katalysator eine basische Verbindung. Besonders bevorzugt ist ein basischer Co-Katalysator eine organische tertiäre Aminverbindung, beispielsweise ein Trialkylamin, wobei die Alkylreste unabhängig voneinander von ein bis acht Kohlenstoffatome umfassen. Beispiele für besonders bevorzugte basische Co-Katalysatoren sind Triethylamin, Trioctylamin, und dergleichen. Ebenfalls bevorzugte basische Co-Katalysatoren sind basische lonentauscherharze mit tertiären Amingruppen, wie beispielsweise unter dem Handelsnamen Amberlite IRA-67 erhältlich.

Es wurde gefunden, dass mit einem Co-Katalysator, der aus einer basischen Verbindung ausgewählt wird, insbesondere Triethylamin, Produkte mit besonders vorteilhaften Eigenschaften bereitgestellt werden können.

Das Verhältnis des basischen Co-Katalysators zu dem Katalysator, der in der erfindungsgemäßen Zusammensetzung enthalten ist bzw. in der erfindungsgemäßen Zusammensetzung verwendet wird, beträgt vorzugsweise von 1:2 bis 5:1 (Gewichtsverhältnis), weiter bevorzugt von 2:3 bis 3:1, und besonders bevorzugt von 1:1 bis 2:1.

Als basischer Co-Katalysator sind bevorzugt von 0,1 bis 0,5% Trialkylamin, bezogen auf die gesamte Dichtstoffzusammensetzung, weiter bevorzugt von 0,1 bis 0,4%, und besonders bevorzugt von 0,2 bis 0,3% in der erfindungsgemäßen Zusammensetzung enthalten. Wenn ein lonentauscherharz als basischer Co-Katalysator verwendet wird, sind bevorzugt von 0,2 bis 1,0% lonentauscherharz, bezogen auf die gesamte Dichtstoffzusammensetzung, weiter bevorzugt von 0,3 bis 0,8%, und besonders bevorzugt von 0,4 bis 0,6% in der erfindungsgemäßen Zusammensetzung enthalten.

Eine erfindungsgemäße Zusammensetzung umfasst mindestens einen Vernetzer auf Basis einer Silanverbindung mit Lactatgruppen, insbesondere einer Silanverbindung mit Ethyllactatgruppen.

Bevorzugt umfasst der Vernetzer (Härter) mit Lactatgruppen mindestens eine Verbindung mit der allgemeinen Formel Si(R¹)ₙR²ₘ (I), mit n = 1, 2, 3 oder 4, und m = (4-n), wobei die Reste R¹ 2-Hydroxypropionsäurealkylester-Reste mit der allgemeinen Formel -OCH(CH₃)COOR sind, wobei der Rest R ein optional substituierter, geradkettiger oder verzweigter Alkylrest mit 1 bis 4 Kohlenstoffatomen ist, und wobei der oder die Reste R² ausgewählt werden aus der Gruppe, bestehend aus einem optional substituierten, geradkettigen oder verzweigten Alkylrest mit mindestens einem Kohlenstoffatom, einem optional substituierten, geradkettigen oder verzweigten Alkenyl- oder Alkinylrest mit jeweils mindestens zwei Kohlenstoffatomen, einem optional substituierten Cycloalkylrest mit mindestens drei Kohlenstoffatomen und einem optional substituierten Arylrest mit mindestens fünf Kohlenstoffatomen.

In der allgemeinen Formel (I) bedeutet der zur Beschreibung des Restes R¹ verwendete Begriff "2-Hydroxypropionsäurealkylester-Rest" einen Substituenten der Silanverbindung (I), der durch Kondensieren einer entsprechenden Silanolverbindung mit einem Molekül 2-Hydroxypropionsäurealkylester (auch Milchsäurealkylester oder Alkyllactat genannt) erhalten wird, wobei eine Si-O-Bindung zwischen dem zentralen Siliciumatom der Silanverbindung und dem Sauerstoffatom der freien Hydroxyfunktion der mit einem Alkohol veresterten 2-Hydroxypropionsäure ausgebildet wird. Der 2-Hydroxypropionsäurealkylester-Rest R¹ wird durch die allgemeine Formel -OCH(CH₃)COOR dargestellt, wobei der Rest R ein optional substituierter, geradkettiger oder verzweigter Alkylrest mit 1 bis 4 Kohlenstoffatomen ist. Bevorzugt ist der Alkyl-Rest R ein Methyl-, Ethyl-, Propyl- oder Isopropylrest, und besonders bevorzugt ein Ethylrest. Entsprechend ist der Rest R¹ bevorzugt ein 2-Hydroxypropionsäuremethylesterrest, ein 2-Hydroxypropionsäureethylesterrest, ein 2-Hydroxypropionsäurepropylesterrest, oder ein 2-Hydroxypropionsäureisopropylesterrest. Besonders bevorzugt ist der Rest R¹ ein 2-Hydroxypropionsäureethylesterrest (Ethyllactato-Rest).

Im Sinne dieser Erfindung umfasst der Begriff "2-Hydroxypropionsäurealkylester-Rest" alle Stereoisomere (Enantiomere) des entsprechenden 2-Hydroxypropionsäurealkylesters, insbesondere den reinen (R)-2-Hydroxypropionsäurealkylester und den reinen (S)-2-Hydroxypropionsäurealkylester, sowie Mischungen davon, einschließlich einer racemischen Mischung. Beispielsweise umfasst im Sinne dieser Erfindung der 2-Hydroxypropionsäureethylester den reinen (R)-2-Hydroxypropionsäureethylester (D-(+)-Milchsäureethylester) und den reinen (S)-2-Hydroxypropionsäureethylester (L-(-)-Milchsäureethylester), sowie Mischungen davon, einschließlich einer racemischen Mischung.

In der allgemeinen Formel (I) bezeichnet der Begriff "Alkylrest" einen Molekülrest R² auf Basis einer gesättigten aliphatischen Kohlenwasserstoffverbindung. Ein "Alkylrest mit mindestens einem Kohlenstoffatom" umfasst bevorzugt eine Kohlenwasserstoffverbindung mit 1 bis 8 Kohlenstoffatomen, weiter bevorzugt 1 bis 6 Kohlenstoffatomen, weiter bevorzugt 1 bis 4 Kohlenstoffatomen, und besonders bevorzugt 1 oder 2 Kohlenstoffatomen. Der Begriff "Alkylrest" umfasst sowohl geradkettige, als auch verzweigte Kohlenwasserstoffketten. Sofern durch Verzweigungen und/oder Substitutionen der Kohlenwasserstoffkette Stereoisomere möglich sind, umfasst der Begriff "Alkylrest" nicht nur eine racemische Mischung, sondern auch die reinen Enantiomere und/oder Diastereomere, sowie Mischungen davon. Der "Alkylrest" ist bevorzugt über eine Si-C-Bindung mit der Silanverbindung mit der allgemeinen Formel (I) verbunden. Insbesondere umfasst der Begriff "Alkylrest mit mindestens einem Kohlenstoffatom" einen Methyl-, Ethyl-, Propyl-, Isopropyl-, Butyl-, Isobutyl-, sec-Butyl- und tert-Butylrest. Besonders bevorzugt ist der Alkylrest ein Methylrest oder ein Ethylrest.

Die Begriffe "Alkenylrest" und "Alkinylrest" umfassen jeweils einen Molekülrest R² auf Basis einer teilweise ungesättigten aliphatischen Kohlenwasserstoffverbindung, die im Falle des Alkenylrestes mindestens eine C-C-Doppelbindung und im Falle des Alkinylrestes mindestens eine C-C-Dreifachbindung umfasst. Ein "Alkenylrest mit mindestens zwei Kohlenstoffatomen" bzw. ein "Alkinylrest mit mindestens zwei Kohlenstoffatomen" umfasst bevorzugt 2 bis 8 Kohlenstoffatome, weiter bevorzugt 2 bis 6 Kohlenstoffatome, und besonders bevorzugt 2 bis 4 Kohlenstoffatome. Der Begriff "Alkenylrest" bzw. "Alkinylrest" umfasst sowohl geradkettige, als auch verzweigte Kohlenwasserstoffketten. Sofern durch Verzweigungen und/oder Substitutionen der Kohlenwasserstoffkette Stereoisomere möglich sind, umfasst der Begriff "Alkenylrest" bzw. "Alkinylrest" nicht nur eine racemische Mischung, sondern auch die reinen Enantiomere und/oder Diastereomere, sowie Mischungen davon. Der "Alkenylrest" bzw. "Alkinylrest" ist bevorzugt über eine Si-C-Bindung mit der Silanverbindung mit der allgemeinen Formel (I) verbunden. Insbesondere umfasst der Begriff "Alkenylrest mit mindestens zwei Kohlenstoffatomen" einen Allyl- und einen Vinylrest, und der Begriff "Alkinylrest" umfasst insbesondere einen Ethinylrest (Acetylenylrest). Bevorzugt ist der Rest R² im Vernetzer mit der allgemeinen Formel (I) ein Allylrest oder ein Vinylrest, besonders bevorzugt ein Vinylrest.

Der Begriff "Cycloalkylrest" bezeichnet einen Molekülrest R² auf Basis einer cyclischen, gesättigten oder teilweise ungesättigten aliphatischen Kohlenwasserstoffverbindung. Ein "Cycloalkylrest mit mindestens drei Kohlenstoffatomen" umfasst bevorzugt 3 bis 8 Kohlenstoffatome, weiter bevorzugt 3 bis 6 Kohlenstoffatome, noch weiter bevorzugt 4 bis 6 Kohlenstoffatome, und besonders bevorzugt 5 oder 6 Kohlenstoffatome. Der Begriff "Cycloalkylrest" umfasst auch Kohlenwasserstoffringe, die mit geradkettigen und/oder verzweigten Kohlenwasserstoffketten substituiert sind. Sofern durch Verzweigungen und/oder Substitutionen des Kohlenwasserstoffringes Stereoisomere möglich sind, umfasst der Begriff "Cycloalkylrest" nicht nur eine racemische Mischung, sondern auch die reinen Enantiomere und/oder Diastereomere, sowie Mischungen davon. Der "Cycloalkylrest" ist bevorzugt über eine Si-C-Bindung mit der Silanverbindung mit der allgemeinen Formel (I) verbunden. Insbesondere umfasst der Begriff "Cycloalkylrest mit mindestens drei Kohlenstoffatomen" einen Cyclopropyl-, Cyclobutyl-, Cyclopentyl- und Cyclohexylrest.

In der allgemeinen Formel (I) bezeichnet der Begriff "Arylrest" einen Molekülrest R² auf Basis einer aromatischen Kohlenwasserstoffverbindung. Ein "Arylrest mit mindestens fünf Kohlenstoffatomen" umfasst bevorzugt eine aromatische Kohlenwasserstoffverbindung mit 5 bis 12 Kohlenstoffatomen, weiter bevorzugt 6 bis 12 Kohlenstoffatomen, und besonders bevorzugt 6 bis 10 Kohlenstoffatomen. Der Arylrest mit sechs Kohlenstoffatomen kann in der Verbindung mit der allgemeinen Formel (I) auch ein unsubstituierter Phenylrest gemäß obiger Definition sein. Der Begriff "Arylrest" umfasst aromatische Ringsysteme mit einem, zwei, drei oder mehr Ringen, die sowohl über C-C-Einfachbindungen, als auch über gemeinsame Kanten miteinander verbunden sein können. Der "Arylrest" ist bevorzugt über eine Si-C-Bindung mit der Silanverbindung mit der allgemeinen Formel (I) verbunden. Insbesondere umfasst der Begriff "Arylrest mit mindestens fünf Kohlenstoffatomen" einen Cyclopentadienyl-, Phenyl-, Naphthyl-, und Diphenylrest. Besonders bevorzugt ist der Arylrest ein Phenylrest.

Erfindungsgemäß umfasst die Zusammensetzung mindestens einen Vernetzer mit der allgemeinen Formel (I), bevorzugt 1 bis 5 Vernetzer mit der allgemeinen Formel (I), weiter bevorzugt 1 bis 3 Vernetzer mit der allgemeinen Formel (I), und besonders bevorzugt 2 Vernetzer mit der allgemeinen Formel (I).

In einer besonders bevorzugten Ausführungsform umfasst der Vernetzer mindestens eine Verbindung mit der allgemeinen Formel (I), die aus der Gruppe ausgewählt wird, die aus Methyl-tris(ethyllactato)silan, Ethyl-tris(ethyllactato)silan, Phenyl-tris(ethyllactato)silan, Vinyl-tris(ethyllactato)silan und Tetra(ethyllactato)silan besteht.

Eine erfindungsgemäße Zusammensetzung umfasst mindestens eine Organosiliconverbindung, vorzugsweise zwei, drei oder mehrere verschiedene Organosiliconverbindungen. Eine in der Zusammensetzung enthaltene Organosiliconverbindung ist bevorzugt eine oligomere oder polymere Verbindung. Die polymere Organosiliconverbindung ist vorzugsweise eine difunktionelle Polyorganosiloxanverbindung, besonders bevorzugt ein α,ω-dihydroxyl-terminiertes Polyorganosiloxan. Ganz besonders bevorzugt sind α,ω-dihydroxyl-terminierte Polydiorganosiloxane, insbesondere α,ω-dihydroxyl-terminierte Polydialkylsiloxane, α,ω-dihydroxyl-terminierte Polydialkenylsiloxane oder α,ω-dihydroxyl-terminierte Polydiarylsiloxane. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliciumatom, als auch Copolymere aus Monomeren mit verschiedenen organischen Substituenten an einem Siliciumatom umfaßt sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können a,co-dihydroxyl-terminierte Polydiorganosiloxane mit teilfluorierten oder perfluorierten organischen Substituenten verwendet werden oder α,ω-dihydroxyl-terminierte Polydiorganosiloxane mit durch Hydroxyl- und/oder Aminogruppen-substituierten organischen Substituenten an den Siliciumatomen.

Besonders bevorzugte Beispiele für eine Organosiliconverbindung sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt.

Es können auch Mischungen aus Polydiorganosiloxanen mit unterschiedlichen Viskositäten verwendet werden.

Es wurde gefunden, dass Siliconkautschukmassen mit besonders vorteilhaften Eigenschaften erhalten werden, wenn die mindestens eine Organosiliconverbindung und der mindestens eine Vernetzer auf Basis einer Silanverbindung mit Lactatgruppen vor dem Mischen mit dem Katalysator in einem vorgelagerten ersten Schritt miteinander gemischt und zur Reaktion gebracht worden sind.

Entsprechend wird eine bevorzugte erfindungsgemäße Zusammensetzung durch ein erfindungsgemäßes Verfahren hergestellt, in dem mindestens eine Organosiliconverbindung und mindestens ein Vernetzer auf Basis einer Silanverbindung mit Lactatgruppen in einem ersten Schritt miteinander gemischt und zur Reaktion gebracht werden, bevor die so erhaltene Zusammensetzung in einem folgenden Schritt mit einem Katalysator gemischt wird, wobei der Katalysator mindestens zwei voneinander verschiedene Verbindungen umfasst, die unabhängig voneinander aus Metallsalzen von Carbonsäuren ausgewählt werden.

Vorzugsweise werden die mindestens eine Organosiliconverbindung und der mindestens eine Vernetzer auf Basis einer Silanverbindung mit Lactatgruppen im ersten Schritt unter Zugabe eines ersten Katalysators zur Reaktion gebracht. Der erste Katalysator wird vorzugsweise aus einer sauren Verbindung ausgewählt. Als Katalysator für den ersten Reaktionsschritt (im Rahmen dieser Anmeldung auch als Vorreaktion oder Präpolymerisationsreaktion bezeichnet) geeignete saure Verbindungen sind beispielsweise organische Säuren oder Ester von anorganischen Säuren mit organischen Resten. Bevorzugte saure Verbindungen sind saure Ester der Phosphorsäure mit Alkylalkoholen, wobei die Alkylreste bevorzugt von ein bis acht Kohlenstoffatome umfassen. Besonders bevorzugt ist ein saurer Katalysator für die Vorreaktion mindestens ein 2-Ethylhexylphosphat. Ein 2-Ethylhexylphosphat bezeichnet einen Ester aus 2-Ethylhexanol und orthoPhosphorsäure. Bevorzugte Ester sind ein Monoester, ein Diester, und eine Mischung daraus. Ganz besonders bevorzugt ist ein saurer Katalysator für die Vorreaktion ein Gemisch aus einem Mono- und einem Di-Ester, wie beispielsweise Mono(2-ethylhexyl)phosphat und Di(2-ethylhexyl)phosphat, vorzugsweise im Verhältnis 1:1.

Bevorzugt werden von 0,02 bis 0,10% des sauren Katalysators für die Vorreaktion verwendet, bezogen auf die gesamte Dichtstoffzusammensetzung, weiter bevorzugt von 0,03 bis 0,08%, und besonders bevorzugt von 0,05 bis 0,07%.

Bevorzugt wird die Vorreaktion unter Ausschluß von Luft und Feuchtigkeit (Wasser) durchgeführt. Besonders bevorzugt werden die einzelnen Komponenten unter Ausschluß von Luft und Feuchtigkeit, beispielsweise unter einem Schutzgas, wie z.B. Argon, miteinander gemischt. Die Vorreaktion kann auch unter reduziertem Druck (Vakuum) durchgeführt werden, wobei ein reduzierter Druck bevorzugt von 50 bis 200 mbar beträgt. Bevorzugt wird die Vorreaktion bei einer Temperatur von Raumtemperatur bis 60°C durchgeführt. Bevorzugt wird die Mischung während der Vorreaktion bewegt, z.B. durch Rühren. Die Vorreaktion wird bevorzugt für zehn Minuten oder mehr durchgeführt.

Es wird angenommen, dass die Vorreaktion zwischen der mindestens einen Organosiliconverbindung und dem mindestens einen Vernetzer auf Basis einer Silanverbindung mit Lactatgruppen zur Ausbildung von Hetero-Dimeren bzw. Oligomeren führt, was zu einer geringfügigen Änderung der Viskosität der Mischung führt. Die Zusammensetzung, die als Produkt der Vorreaktion erhalten wird, ist jedoch immer noch flüssig und kann weiter verarbeitet werden.

Bevorzugt wird die Vorreaktion durch Neutralisieren abgebrochen. Eine Neutralisation wird bevorzugt durch Zugabe einer basischen Verbindung durchgeführt, wobei besonders bevorzugt eine basische Verbindung, die auch als basischer Co-Katalysator wirken kann, im Überschuß zugegeben wird. Besonders bevorzugt wird Triethylamin zum Neutralisieren verwendet.

In einer besonders bevorzugten Ausführungsform werden die mindestens eine Organosiliconverbindung und der mindestens eine Vernetzer auf Basis einer Silanverbindung mit Lactatgruppen miteinander unter Zugabe eines sauren Katalysators für die Vorreaktion, der aus einer sauren Verbindung, insbesondere mindestens einem 2-Ethylhexylphosphat, ausgewählt wird, gemischt und zur Reaktion gebracht, und dann die so erhaltene Zusammensetzung vor dem Mischen mit dem Katalysator, der ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst, durch Zugabe einer basischen Verbindung, bevorzugt Triethylamin, neutralisiert.

Es wurde gefunden, daß die erfindungsgemäße Zusammensetzung unter Feuchtigkeitsausschluß über Zeitspannen von mehr als 12 Monaten aufbewahrt werden kann und unter dem Einfluß von Wasser öder Luftfeuchtigkeit bei Raumtemperatur polymerisiert.

In Gegenwart von Wasser oder Luftfeuchtigkeit polymerisieren bzw. kondensieren die Bestandteile Vernetzer (Härter) und Organosiliconverbindung der erfindungsgemäßen Zusammensetzung unter Ausbildung von Si-O-Si-Bindungen zu Siliconkautschukmassen. Dabei ist vorteilhaft, daß die erfindungsgemäße Zusammensetzung beim Vernetzen (Härten) zu einer Siliconkautschukmasse nur 2-Hydroxypropionsäurealkylester, wie beispielsweise 2-Hydroxypropionsäureethylester (Ethyllactat) abgeben, welches im Gegensatz zu OximVerbindungen, wie z.B. Butan-2-onoxim, gesundheitlich unbedenklich ist, weder korrosiv noch aggressiv gegenüber Werkstoffen wie Metallen, Mörtel oder Stein (Marmor usw.) ist und einen angenehmen Geruch hat. Die Polymerisationsprodukte, die unter Verwendung der erfindungsgemäßen Zusammensetzung hergestellt werden, sind stippenfrei, transparent und klar. Somit kann die erfindungsgemäße Zusammensetzung als Dichtungsmittel, Klebstoff, Beschichtungsmittel oder dergleichen verwendet werden.

Besonders bevorzugt umfasst die erfindungsgemäße Zusammensetzung 40 bis 90 Gew.-% der Organosiliconverbindung, 1 bis 15 Gew.-% des Vernetzers, und 0,1 bis 5,0 Gew.-% des Katalysators, weiter bevorzugt 0,5 bis 2,0% des Katalysators, wobei der Rest jeweils durch übliche Zusätze ausgemacht wird.

Falls gewünscht, kann die erfindungsgemäße Zusammensetzung weitere übliche Zusätze umfassen. Übliche Zusätze sind Füllstoffe, Farbmittel, Weichmacher, Thixotrophiermittel, Benetzungsmittel, Haftmittel und andere. Bevorzugt werden solche optionalen Zusätze bei der Herstellung der erfindungsgemäßen Zusammensetzung nach Abschluß der Vorreaktion beigemischt.

Als Füllstoffe können sowohl verstärkende als auch nicht-verstärkende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Ein besonders bevorzugter Füllstoff ist eine hochdisperse Kieselsäure, wie sie beispielsweise unter dem Namen Cabosil 150 von Cabot erhältlich ist. Füllstoffe wie hochdisperse Kieselsäuren, insbesondere pyrogene Kieselsäuren, können auch als Thixotrophiermittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden.

Als Weichmacher können an sich bekannte Polydiorganosiloxane ohne funktionelle Endgruppen, die sich somit von den erfindungsgemäß verwendeten Organosiliconverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind. Weichmacher haben bevorzugt eine kinematische Viskosität von 1 bis 5.000 cSt (bei 25°C), insbesondere von 50 bis 500 cSt, und besonders bevorzugt von 90 bis 200 cSt. Beispiele für Weichmacher umfassen Polydimethylsiloxane mit einer Viskosität von 90 bis 120 cSt, insbesondere von 100 cSt, Paraffinöle und polysubstituierte Alkylbenzole.

Als Benetzungs- und/oder Haftmittel (Haftvermittler) werden bevorzugt an sich bekannte Silanverbindungen mit reaktive Gruppen tragenden organischen Substituenten am Siliciumatom verwendet, die sich von den erfindungsgemäß verwendeten Organosiliconverbindungen unterscheiden, wie z.B. Organosilane mit reaktiven Amin-, Carbonsäure-, Epoxy- oder Thiolgruppen. Besonders bevorzugte Beispiele umfassen Aminosilane, wie Aminoethyl-aminopropyl-trialkoxysilane. Konkrete Beispiele besonders bevorzugter Haftmittel (Haftvermittler) sind 3-Aminopropyl-triethoxysilan, 3-Aminopropyltrimethoxysilan, Aminoethylaminopropyl-trimethoxysilan, Butylaminopropyl-triethoxysilan, Butylaminopropyl-trimethoxysilan, Propylaminopropyl-triethoxysilan, Propylaminopropyltrimethoxysilan, N-Cyclohexyl-3-aminopropyl-trimethoxysilan, N-Cyclohexyl-3-aminopropyl-triethoxysilan, und Co-Oligomere von Diamino/alkyl-funktionellen Silanen, welche beispielsweise als Dynasylan 1146 von Degussa erhältlich sind. Besonders bevorzugt werden Dimethylaminopropyl-trialkoxysilane verwendet.

In einem weiteren Aspekt stellt die vorliegende Erfindung eine Verwendung der erfindungsgemäßen Zusammensetzung als Dichtungsmittel, Klebstoff, Beschichtungsmittel oder dergleichen bereit. Die Zusammensetzung wird bevorzugt im Bauwesen als Dichtungsmittel oder als Klebstoff eingesetzt, insbesondere für Fugen im Hoch- und Tiefbau, Glas- und Fensterbau (bevorzugt) und im Sanitärbereich. Weitere Verwendungen gibt es im Maschinenbau, z.B. in der Automobilindustrie (bevorzugt), der Elektroindustrie, der Textilindustrie oder beim Industrieanlagenbau.

Die erfindungsgemäße Zusammensetzung kann als RTV-Siliconkautschukmasse entsprechend der gewünschten Anwendung auf einen beliebigen Untergrund aufgetragen werden, wo sie dann unter Einfluß von Wasser oder Luftfeuchtigkeit bei Raumtemperatur polymerisiert. Beispielsweise wird die erfindungsgemäße Zusammensetzung bei Verwendung derselben als Dichtungsmittel in eine abzudichtende Fuge oder dergleichen eingebracht. Bei Verwendung der erfindungsgemäßen Zusammensetzung als Klebstoff wird sie auf eines oder beide der zu verbindenden Teile aufgebracht und diese dann zusammengefügt. Die erfindungsgemäße Zusammensetzung zeichnet sich durch ausgezeichnete Haftung auf allen wichtigen Materialien aus, wie beispielsweise auf Holz, lackiertem Holz, lasiertem Holz, Aluminium, pulverbeschichtetem Aluminium, Glas, PVC, Polyamid, Stahl, Beton, und vielen anderen Materialien. Das erhaltene Polymer ist transparent und weist eine vorteilhafte Elastizität und Härte auf. Außerdem zeichnet sich die erfindungsgemäße Zusammensetzung durch eine kurze Hautbildungszeit, Klebfreizeit und Frühbeanspruchung aus. Weiterhin weist die erfindungsgemäße Zusammensetzung vorteilhafte toxische Eigenschaften und einen angenehmen Geruch auf. Darüber hinaus weist die erfindungsgemäße Zusammensetzung vorteilhafte Lagereigenschaften in der Katusche auf.

In einem weiteren Aspekt stellt die vorliegende Erfindung eine Verwendung eines Katalysators zum Vernetzen einer Siliconkautschukmasse, insbesondere einer Siliconkautschukmasse mit Lactat-Vernetzer, bereit, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.

Der in der erfindungsgemäßen Verwendung verwendete Katalysator ist oben detailliert beschrieben worden.

Bevorzugt wird ein Katalysator verwendet, der mindestens ein Metallsalz einer Carbonsäure umfasst, das aus Bismut-tris(2-ethylhexanoat), Calcium-bis(2-ethylhexanoat), Natrium(2-ethylhexanoat) und Zink-bis(2-ethylhexanoat) ausgewählt wird.

Besonders bevorzugt umfasst der verwendete Katalysator Calcium-bis(2-ethylhexanoat) und Zink-bis(2-ethylhexanoat), vorzugsweise in einem Zahlenverhältnis von 1,3:1 bis 1:1,3.

Besonders bevorzugt umfasst der verwendete Katalysator Bismut-tris(2-ethylhexanoat) und Zink-bis(2-ethylhexanoat), vorzugsweise in einem Zahlenverhältnis von 1,3:1 bis 1:1,3.

Besonders bevorzugt umfasst der verwendete Katalysator Natrium(2-ethylhexanoat) und Zink-bis(2-ethylhexanoat), vorzugsweise in einem Zahlenverhältnis von 1,3:1 bis 1:1,3.

Besonders bevorzugt wird der Katalysator zusammen mit einem Co-Katalysator verwendet, wie er oben ausführlich beschrieben worden ist. Weiter bevorzugt wird der Co-Katalysator aus einer basischen Verbindung ausgewählt, insbesondere aus einem Trialkylamin, und besonders bevorzugt Triethylamin.

Es wurde gefunden, dass bei gleichzeitiger Verwendung eines Co-Katalysators Polymerisationsprodukte mit besonders gewünschten Eigenschaften gebildet werden.

Das Verhältnis des basischen Co-Katalysators zu dem Katalysator, die gemeinsam in der erfindungsgemäßen Zusammensetzung verwendet werden, beträgt vorzugsweise von 1:2 bis 5:1 (Gewichtsverhältnis), weiter bevorzugt von 2:3 bis 3:1, und besonders bevorzugt von 1:1 bis 2:1.

Als basischer Co-Katalysator werden bevorzugt von 0,1 bis 0,5% Trialkylamin, bezogen auf die gesamte Dichtstoffzusammensetzung, weiter bevorzugt von 0,1 bis 0,4%, und besonders bevorzugt von 0,2 bis 0,3% verwendet. Wenn ein lonentauscherharz als basischer Co-Katalysator verwendet wird, werden bevorzugt von 0,2 bis 1,0% lonentauscherharz, bezogen auf die gesamte Dichtstoffzusammensetzung, weiter bevorzugt von 0,3 bis 0,8%, und besonders bevorzugt von 0,4 bis 0,6% verwendet.

Besonders bevorzugt wird der Katalysator zum Vernetzen einer Siliconkautschukmasse mit Lactat-Vernetzer verwendet, die mindestens eine Organosiliconverbindung und mindestens einen Lactat-Vernetzer umfasst, wobei als die mindestens eine Organosiliconverbindung und als der mindestens eine Lactat-Vernetzer vorzugsweise die oben beschriebenen Verbindungen verwendet werden.

Besonders bevorzugt umfasst die verwendete Organosiliconverbindung mindestens eine α,ω-dihydroxyl-terminierte Polyorganosiloxanverbindung, insbesondere ein α,ω-dihydroxyl-terminiertes Polydialkylsiloxan.

Besonders bevorzugt umfasst der verwendete Vernetzer mindestens eine Verbindung, die aus der Gruppe ausgewählt wird, die aus Methyl-tris(ethyllactato)silan, Ethyl-tris(ethyllactato)silan, Phenyl-tris(ethyllactato)silan, Vinyl-tris(ethyllactato)silan und Tetra(ethyllactato)silan besteht.

Besonders bevorzugt wird die mindestens eine Organosiliconverbindung und der mindestens eine Vernetzer auf Basis einer Silanverbindung mit Lactatgruppen vor dem Mischen mit dem Katalysator, der ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst, miteinander gemischt und zur Reaktion gebracht, insbesondere unter Zugabe eines ersten Katalysators, wie er oben ausführlich beschrieben worden ist. Insbesondere wird der erste Katalysator für die Vorreaktion aus einer sauren Verbindung ausgewählt, und besonders bevorzugt wird mindestens ein 2-Ethylhexylphosphat als erster Katalysator für die Vorreaktion verwendet. In einer besonders bevorzugten Ausführungsform wird die mindestens eine Organosiliconverbindung und der mindestens eine Vernetzer auf Basis einer Silanverbindung mit Lactatgruppen vor dem Mischen mit dem Katalysator unter Zugabe des ersten Katalysators miteinander gemischt und zur Reaktion gebracht, und die so erhaltene Zusammensetzung dann vor dem Mischen mit dem Katalysator durch Zugabe einer basischen Verbindung, bevorzugt Triethylamin, neutralisiert.

Bevorzugt werden von 0,02 bis 0,10% des sauren Katalysators für die Vorreaktion verwendet, bezogen auf die gesamte Dichtstoffzusammensetzung, weiter bevorzugt von 0,03 bis 0,08%, und besonders bevorzugt von 0,05 bis 0,07%.

Besonders bevorzugt werden 0,1 bis 5,0 Gew.-% des Katalysators, der mindestens zwei voneinander verschiedene Verbindungen umfasst, die unabhängig voneinander aus Metallsalzen von Carbonsäuren ausgewählt werden, mit 40 bis 90 Gew.-% der Organosiliconverbindung und 1 bis 15 Gew.-% des Vernetzers verwendet.

Durch die erfindungsgemäße Verwendung des beschriebenen Katalysators kann eine Vernetzung einer Siliconkautschukmasse mit Lactat-Vernetzer entsprechend einer gewünschten Anwendung vorteilhaft gesteuert werden, so dass Polymerisationsprodukte mit gewünschten Eigenschaften gebildet werden.

### Beispiele

In den Beispielen und Vergleichsbeispielen werden folgende Metallsalze von Carbonsäuren verwendet, die beispielsweise von der Fa. Gelest (Morrisville, USA) erhältlich sind.

Als Calciumsalz von Carbonsäuren wird Calcium-bis(2-ethylhexanoat) verwendet, das unter der CAS-Nr. 68409-80-3 klassifiziert ist.

Als Lithiumsalz von Carbonsäuren wird Lithiumethylhexanoat verwendet, das unter der CAS-Nr. 15590-62-2 klassifiziert ist.

Als Strontiumsalz von Carbonsäuren wird Strontium-bis(2-ethylhexanoat) verwendet, das unter der CAS-Nr. 2457-02-5 klassifiziert ist.

Als Zinksalz von Carbonsäuren wird Zink-bis(2-ethylhexanoat) verwendet, das unter der CAS-Nr. 85203-81-2 klassifiziert ist.

Die weiteren Chemikalien, die in den Beispielen und Vergleichsbeispielen verwendet werden, sind von den im folgenden genannten Herstellern erhältlich:
Polydimethylsiloxan (80000 cSt) von der Fa. Wacker Chemie, Burghausen, Deutschland; Polymethylsiloxan (100 cSt) von der Fa. Dow Corning, Seneffe, Belgien;
Füllstoff (hochdisperse Kieselsäure) von der Fa. Cabot Rheinfelden, Deutschland; Aminopropyltriethoxysilan von der Fa. Nitrochemie Aschau GmbH, Deutschland; Haftvermittler (Dimethylaminopropyl-trimethoxysilan) von der Fa. Nitrochemie Aschau GmbH, Deutschland;
Co-Katalysator (Triethylamin) von der Fa. Nitrochemie Aschau GmbH, Deutschland; Vernetzermischungen von der Fa. Nitrochemie Aschau GmbH, Deutschland.

Als saurer Katalysator für die Vorreaktion wurde eine 1:1 Mischung aus dem Mono- und Di-Ester von 2-Ethylhexanol und Phosphorsäure verwendet (CAS-Nr. 12645-31-7; erhältlich von der Fa. VWR, Darmstadt, Deutschland.

### Messung der Produkteigenschaften der hergestellten Dichtstoffe

Die Produkteigenschaften Hautbildungszeit, Klebfreizeit, Frühbeanspruchung, vollständige Aushärtung, Aussehen und Shore-Härte A wurden für alle hergestellten Dichtstoffe nach üblichen Verfahren bestimmt (s. z.B. "Praxishandbuch Dichtstoffe" vom Industrieverband Dichtstoffe e.V., 3. Auflage/1990). Alle Messungen wurden bei Bedingungen von 23°C und 50% Luftfeuchtigkeit durchgeführt.

Zur Bestimmung der Hautbildungszeit wurde die Zeit gemessen, zu der an der Oberfläche eines Probenstranges eine vollständige Schicht aus verfestigtem Material (Haut) beobachtet wurde.

Zur Bestimmung der Klebfreizeit wurde die Zeit gemessen, zu der die Oberfläche eines Probenstranges keine Klebrigkeit mehr aufweist.

Zur Bestimmung der Frühbeanspruchung wurde ein Siliconstreifen von 10 mm Höhe auf einen Blechstreifen ausgebracht. Die Belastbarkeit wird durch ein Abknicken des Streifens um 90° getestet. Angegeben wird die Zeit, bei der die Haut des Siliconstreifens nicht reißt.

Zur Bestimmung der vollständigen Aushärtung wird der Dichtstoff mit 4 mm Höhe auf eine Glasplatte aufgetragen und die Zeitdauer der Durchhärtung bis zur Glasplatte gemessen.

Zur Bestimmung der Oberflächenvernetzung (Kerbfestigkeit) wird ein Dichtstoffstreifen von 10 mm Höhe auf eine Glasplatte aufgetragen. Nach 24 Stunden bei Normbedingungen (21 bis 25°C; 40 bis 60% Luftfeutigkeit) wird eine Kerbe in die Oberfläche eingedrückt. Nach 10 Sekunden wird geprüft, ob die Einkerbung reversibel ist.

Das Aussehen wurde durch organoleptische Prüfung bestimmt.

Die Shore-Härte A wurde mit einem Zwick-Roell-Messgerät (Bez.: ASTM D 2240; DIN 53505; ISO 868) bestimmt. Dazu wurde die jeweilige Dichtstoffprobe mit einer Applikationshöhe von 10 mm aufgetragen und 7 Tage bei Normbedingungen (23°C/50%LF) aufbewahrt. Die Messung erfolgte nach 7 Tagen Lagerung bei Normbedingungen.

### Beispiel 1:

### Herstellung von Katalysator A

Es wird ein erfindungsgemäßer Katalysator A hergestellt, der Calcium- und Zinksalze von Carbonsäuren umfasst.

Für Katalysator A werden Calcium-bis(2-ethylhexanoat) und Zink-bis(2-ethylhexanoat) im Verhältnis 4:5 gemischt (Gewichtsverhältnis).

### Beispiel 2:

### Herstellung von Siliconkautschukgrundmischung 1

Unter Ausschluß von Luft und Feuchtigkeit wird eine Siliconkautschukgrundmischung 1 gemäß folgender Formulierung wie unten beschrieben hergestellt:

| | |
|---|---|
| 480,0 g | α,ω-dihydroxyl-terminiertes Polydimethylsiloxan mit einer Viskosität von 80.000 cSt |
| 354,0 g | Polymethylsiloxan mit Viskosität 100 cSt |
| 56,2 g | Vernetzermischung aus |
| | 28,1 g Tetra(ethyllactato)-silan und |
| | 28,1 g Vinyl-tris-(ethyllactato)-silan |
| 0,5 g | Ethylhexylphosphat (Katalysator für Vorreaktion) |

Die Bestandteile der Grundmischung werden unter Vakuum für 10 Minuten gerührt, um durch eine durch Ethylhexylphosphat katalysierte Vorvernetzung (Vorreaktion) ein Präpolymer (Reaktionsprodukt aus hydroxyl-terminierten Polydimethylsiloxan und Silanen) zu erhalten. Nach zehn Minuten wird das erhaltene Präpolymer unter Luft- und Feuchtigkeitsausschluß in den unten beschriebenen Beispielen und Vergleichsbeispielen zu Dichtstoffen weiterverarbeitet.

### Beispiel 3:

### Herstellung von Siliconkautschukgrundmischung 2

Unter Ausschluß von Luft und Feuchtigkeit wird eine Siliconkautschukgrundmischung 1 gemäß folgender Formulierung wie unten beschrieben hergestellt:

| | |
|---|---|
| 480,0 g | α,ω-dihydroxyl-terminiertes Polydimethylsiloxan mit einer Viskosität von 80.000 cSt |
| 354,0 g | Polymethylsiloxan mit Viskosität 100 cSt |
| 56,2 g | Vernetzermischung aus |
| | 16,9 g Tetra(ethyllactato)-silan und |
| | 39,3 g Vinyl-tris-(ethyllactato)-silan |
| 0,5 g | Ethylhexylphosphat (Katalysator für Vorreaktion) |

Die Bestandteile der Grundmischung werden unter Vakuum für 10 Minuten gerührt, um durch eine durch Ethylhexylphosphat katalysierte Vorvernetzung (Vorreaktion) ein Präpolymer (Reaktionsprodukt aus hydroxyl-terminierten Polydimethylsiloxan und Silanen) zu erhalten. Nach zehn Minuten wird das erhaltene Präpolymer unter Luft- und Feuchtigkeitsausschluß in den unten beschriebenen Beispielen und Vergleichsbeispielen zu Dichtstoffen weiterverarbeitet.

### Vergleichsbeispiel 1:

### Dichtstoffrezeptur 1 mit Zink-Katalysator

Zu der in Beispiel 2 hergestellten Siliconkautschukgrundmischung 1 werden 2,0 g Zink-bis(2-ethylhexanoat) als Katalysator und die folgenden Zusätze zugegeben und die Zusammensetzung gemischt:

| | |
|---|---|
| 88,0 g | Hochdisperse Kieselsäure (Füllstoff) |
| 15,0 g | Haftvermittler (Umsetzungsprodukt aus OH-Polymer und Dimethylaminopropyl-trimethoxysilan) |
| 3,0 g | Aminopropyltriethoxysilan (Thixotropiermittel) |
| 2,0 g | Triethylamin (Co-Katalysator) |

Die erhaltene Siliconkautschukmischung wird in übliche Kartuschen gefüllt und wie beschrieben untersucht.

Der Dichtstoff hat nach Ausbringung an Luft:
- eine Hautbildungszeit von 7 min
- eine Klebfreizeit von 15 min
- eine Frühbeanspruchung nach 60 min
- eine vollständige Aushärtung nach 24 h (Kerbfestigkeit)
- ein transparentes Aussehen
- eine Shore-Härte A von 24

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf. Bereits nach 4 Wochen Lagerung bei 60°C in der Kartusche erreicht der Dichtstoff nach 7 Tagen Aushärtung an der Luft nur noch eine Shore-Härte A von 14. Außerdem wird ein Vergilben des Dichtstoffes beobachtet.

### Vergleichsbeispiel 2:

### Dichtstoffrezeptur 2 mit Lithium-Katalvsator

Zu der in Beispiel 3 hergestellten Siliconkautschukgrundmischung 2 werden 2,0 g Lithium-2-ethylhexanoat als Katalysator und die folgenden Zusätze zugegeben und die Zusammensetzung gemischt:

| | |
|---|---|
| 88,0 g | Hochdisperse Kieselsäure (Füllstoff) |
| 15,0 g | Haftvermittler (Umsetzungsprodukt aus OH-Polymer und Dimethylaminopropyl-trimethoxysilan) |
| 3,0 g | Aminopropyltriethoxysilan (Thixotropiermittel) |
| 2,0 g | Triethylamin (Co-Katalysator) |

Die erhaltene Siliconkautschukmischung wird in übliche Kartuschen gefüllt und wie beschrieben untersucht.

Der Dichtstoff hat nach Ausbringung an Luft:
- eine Hautbildungszeit von 5 min
- eine Klebfreizeit von 15 min
- eine Frühbeanspruchung nach 50 min
- eine vollständige Aushärtung nach 24 h (Kerbfestigkeit)
- ein transparentes Aussehen
- eine Shore-Härte A von 24

Weiterhin wurde gefunden, dass der Dichtstoff eine gute Haftung auf Aluminium, pulverbeschichtetem Aluminium, Glas, PVC, und Stahl aufweist. Dagegen ist die Haftung auf Holz, lackiertem Holz, lasiertem Holz, Polyamid und Beton nur schlecht.

Der Dichtstoff weist ferner eine ungenügende Lagerstabilität in der Kartusche auf. Bereits nach 4 Wochen Lagerung bei 60°C in der Kartusche haben sich die folgenden Parameter verschlechtert:
- Shore-Härte A nach 7 Tagen an der Luft nur noch 16
- starkes Vergilben des Dichtstoffs
- schlechte Haftung auf den meisten Untergründen
- keine vollständige Aushärtung nach 24 h (Kerbfestigkeit)

### Vergleichsbeispiel 3:

### Dichtstoffrezeptur 2 mit Strontium-Katalysator

Zu der in Beispiel 2 hergestellten Siliconkautschukgrundmischung 1 werden 2,0 g Strontium-bis(2-ethylhexanoat) als Katalysator und die folgenden Zusätze zugegeben und die Zusammensetzung gemischt:

| | |
|---|---|
| 88,0 g | Hochdisperse Kieselsäure (Füllstoff) |
| 15,0 g | Haftvermittler (Umsetzungsprodukt aus OH-Polymer und Dimethylaminopropyl-trimethoxysilan) |
| 3,0 g | Aminopropyltriethoxysilan (Thixotropiermittel) |
| 2,0 g | Triethylamin (Co-Katalysator) |

Die erhaltene Siliconkautschukmischung wird in übliche Kartuschen gefüllt und wie beschrieben untersucht.

Der Dichtstoff hat nach Ausbringung an Luft:
- eine Hautbildungszeit von 5 min
- eine Klebfreizeit von 15 min
- eine Frühbeanspruchung nach 50 min
- eine vollständige Aushärtung nach 24 h (Kerbfestigkeit)
- ein transparentes Aussehen
- eine Shore-Härte A von 24

Weiterhin wurde gefunden, dass der Dichtstoff eine gute Haftung auf Aluminium, pulverbeschichtetem Aluminium, Glas, PVC, und Stahl aufweist. Dagegen ist die Haftung auf Holz, lackiertem Holz, lasiertem Holz, Polyamid und Beton nur schlecht.

Der Dichtstoff weist ferner eine ungenügende Lagerstabilität in der Kartusche auf. Bereits nach 4 Wochen Lagerung bei 60°C in der Kartusche haben sich die folgenden Parameter verschlechtert:
- Shore-Härte A nach 7 Tagen an der Luft nur noch 16
- starkes Vergilben des Dichtstoffs
- schlechte Haftung auf den meisten Untergründen
- keine vollständige Aushärtung nach 24 h (Kerbfestigkeit)

Aus den Vergleichsbeispielen 1 bis 3 ist ersichtlich, dass es nicht möglich ist, mit den bekannten Zinn-freien Katalysatoren eine Dichtstoffmasse mit Lactatvernetzern herzustellen, die gute Produkteigenschaften aufweist. Insbesondere weisen die mit den bekannten Zinn-freien Katalysatoren hergestellten Dichtstoffmassen eine schlechte Haftung auf vielen Materialien sowie eine ungenügende Lagerstabilität auf.

### Beispiel 4:

### Dichtstoffrezeptur 1 mit erfindungsgemäßem Katalysator (Ca + Zn)

Zu der in Beispiel 2 hergestellten Siliconkautschukgrundmischung 1 werden 2,0 g Katalysator A (aus Beispiel 1) und die folgenden Zusätze zugegeben und die Zusammensetzung gemischt:

| | |
|---|---|
| 88,0 g | Hochdisperse Kieselsäure (Füllstoff) |
| 15,0 g | Haftvermittler (Umsetzungsprodukt aus OH-Polymer und Dimethylaminopropyl-trimethoxysilan) |
| 3,0 g | Aminopropyltriethoxysilan (Thixotropiermittel) |
| 2,0 g | Triethylamin (Co-Katalysator) |

Die erhaltene Siliconkautschukmischung wird in übliche Kartuschen gefüllt und wie beschrieben untersucht.

Der Dichtstoff hat nach Ausbringung an Luft:
- eine Hautbildungszeit von 7 min
- eine Klebfreizeit von 16 min
- eine Frühbeanspruchung nach 60 min
- eine vollständige Aushärtung nach 24 h (Kerbfestigkeit)
- ein transparentes Aussehen
- eine Shore-Härte A von 20

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 4 Wochen Lagerung bei 60°C in der Kartusche weist der Dichtstoff noch die gleichen Eigenschaften auf, wie bei der ersten Ausbringung.

### Beispiel 5:

### Dichtstoffrezeptur 2 mit erfindungsgemäßem Katalysator (Ca + Zn)

Zu der in Beispiel 2 hergestellten Siliconkautschukgrundmischung 2 werden 2,0 g Katalysator A (aus Beispiel 1) und die folgenden Zusätze zugegeben und die Zusammensetzung gemischt:

| | |
|---|---|
| 88,0 g | Hochdisperse Kieselsäure (Füllstoff) |
| 15,0 g | Haftvermittler (Umsetzungsprodukt aus OH-Polymer und Dimethylaminopropyl-trimethoxysilan) |
| 3,0 g | Aminopropyltriethoxysilan (Thixotropiermittel) |
| 2,0 g | Triethylamin (Co-Katalysator) |

Die erhaltene Siliconkautschukmischung wird in übliche Kartuschen gefüllt und wie beschrieben untersucht.

Der Dichtstoff hat nach Ausbringung an Luft:
- eine Hautbildungszeit von 10 min
- eine Klebfreizeit von 25 min
- eine Frühbeanspruchung nach 70 min
- eine vollständige Aushärtung nach 24 h (Kerbfestigkeit)
- ein transparentes Aussehen
- eine Shore-Härte A von 21

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 4 Wochen Lagerung bei 60°C in der Kartusche weist der Dichtstoff noch die gleichen Eigenschaften auf, wie bei der ersten Ausbringung.

Im Gegensatz zu den in den Vergleichsbeispielen 1 bis 3 hergestellten Dichtstoffen zeichnen sich die mit den erfindungsgemäßen Katalysator A hergestellten Dichtstoffe mit Lactatvernetzern, unabhängig von den in den Dichtstoffrezepturen 1 und 2 verwendeten Vernetzern, nicht nur durch ausgezeichnete Produkteigenschaften, sondern auch durch eine ausgezeichnete Lagerstabilität aus.

## Patentansprüche

1. Zusammensetzung, umfassend
mindestens eine Organosiliconverbindung,
mindestens einen Vernetzer auf Basis einer Silanverbindung mit Lactatgruppen, und einen Katalysator, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.

2. Zusammensetzung nach Anspruch 1, **dadurch gekennzeichnet, dass** das Verhältnis der Anzahl der Zinkatome des Zinksalzes einer Carbonsäure zu der Anzahl der Metallatome des Metallsalzes einer Carbonsäure von 2:1 bis 1:2 beträgt, bevorzugt von 1,3:1 bis 1:1,3.

3. Zusammensetzung nach einem der vorherigen Ansprüche, **dadurch gekennzeichnet, dass** sie Calcium-bis(2-ethylhexanoat) und Zink-bis(2-ethylhexanoat) umfasst, vorzugsweise in einem Zahlenverhältnis von 1,3:1 bis 1:1,3, oder
**dadurch gekennzeichnet, dass** sie Bismut-tris(2-ethylhexanoat) und Zink-bis(2-ethylhexanoat) umfasst, vorzugsweise in einem Zahlenverhältnis von 1,3:1 bis 1:1,3, oder
**dadurch gekennzeichnet, dass** sie Natrium(2-ethylhexanoat) und Zink-bis(2-ethylhexanoat) umfasst, vorzugsweise in einem Zahlenverhältnis von 1,3:1 bis 1:1,3.

4. Zusammensetzung nach einem der vorherigen Ansprüche, **dadurch gekennzeichnet, dass** sie zusätzlich einen Co-Katalysator umfasst, der aus einer basischen Verbindung, insbesondere Triethylamin, ausgewählt wird.

5. Zusammensetzung nach einem der vorherigen Ansprüche, **dadurch gekennzeichnet, dass** die mindestens eine Organosiliconverbindung und der mindestens eine Vernetzer auf Basis einer Silanverbindung mit Lactatgruppen vor dem Mischen mit dem Katalysator miteinander gemischt und zur Reaktion gebracht worden sind.

6. Zusammensetzung nach Anspruch 5, **dadurch gekennzeichnet, dass** die mindestens eine Organosiliconverbindung und der mindestens eine Vernetzer auf Basis einer Silanverbindung mit Lactatgruppen miteinander unter Zugabe eines ersten Katalysators, der aus einer sauren Verbindung, insbesondere mindestens einem 2-Ethylhexylphosphat, ausgewählt wird, gemischt und zur Reaktion gebracht worden sind, und die so erhaltene Zusammensetzung vor dem Mischen mit dem Katalysator durch Zugabe einer basischen Verbindung, bevorzugt Triethylamin, neutralisiert worden ist.

7. Zusammensetzung nach einen der vorherigen Ansprüche, **dadurch gekennzeichnet, dass** die Organosiliconverbindung eine α,ω-dihydroxyl-terminierte Polyorganosiloxanverbindung ist, insbesondere ein α,ω-dihydroxyl-terminiertes Polydialkylsiloxan.

8. Zusammensetzung nach einem der vorherigen Ansprüche, **dadurch gekennzeichnet, dass** der Vernetzer mindestens eine Verbindung umfasst, die aus der Gruppe ausgewählt wird, die aus Methyl-tris(ethyllactato)silan, Ethyl-tris(ethyllactato)silan, Phenyl-tris(ethyllactato)silan, Vinyl-tris(ethyllactato)silan und Tetra(ethyllactato)silan besteht.

9. Zusammensetzung nach einen der vorherigen Ansprüche, **dadurch gekennzeichnet, dass** sie 40 bis 90 Gew.-% der Organosiliconverbindung, 1 bis 15 Gew.-% des Vernetzers, und 0,1 bis 5,0 Gew.-% des umfasst.

10. Verfahren zur Herstellung einer Zusammensetzung nach einem der vorherigen Ansprüche, **dadurch gekennzeichnet, dass** in einem ersten Schritt mindestens eine Organosiliconverbindung und mindestens ein Vernetzer auf Basis einer Silanverbindung mit Lactatgruppen miteinander gemischt und zur Reaktion gebracht werden, vorzugsweise unter Zugabe eines ersten Katalysators, der aus einer sauren Verbindung, insbesondere mindestens einem 2-Ethylhexylphosphat, ausgewählt wird, bevor die so erhaltene Zusammensetzung in einem folgenden Schritt mit einem Katalysator gemischt wird, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.

11. Verwendung einer Zusammensetzung nach einem der Ansprüche 1 bis 9 als Dichtungsmittel, Klebstoff oder Beschichtungsmittel.

12. Verwendung eines Katalysators zum Vernetzen einer Siliconkautschukmasse, insbesondere zum Vernetzen einer Siliconkautschukmasse mit Lactat-Vernetzer, wobei der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.

13. Verwendung nach Anspruch 12, **dadurch gekennzeichnet, dass** das Verhältnis der Anzahl der Zinkatome des Zinksalzes einer Carbonsäure zu der Anzahl der Metallatome des Metallsalzes einer Carbonsäure von 2:1 bis 1:2 beträgt, bevorzugt von 1,3:1 bis 1:1,3.

## Claims

1. A composition comprising
at least one organosilicone compound,
at least one cross-linker on the basis of a silane compound having lactate groups, and
a catalyst, wherein the catalyst comprises a metal salt of a carboxylic acid, which is a zinc salt of one or more branched saturated carboxylic acids having six to nineteen carbon atoms, and a metal salt of a carboxylic acid, which is selected from the group consisting of a bismuth salt, a calcium salt, a potassium salt, a lithium salt, a magnesium salt, and a sodium salt, each of one or more branched saturated carboxylic acids having six to nineteen carbon atoms.

2. A composition according to claim 1, **characterized in that** the ratio of the number of zinc atoms of the zinc salt of a carboxylic acid to the number of the metal atoms of the metal salt of a carboxylic acid is from 2:1 to 1:2, preferred from 1,3:1 to 1:1,3.

3. A composition according to any one of the preceding claims, **characterized in** comprising calcium-bis(2-ethylhexanoate) and zinc-bis(2-ethylhexanoate), preferred in a number ratio of 1,3:1 to 1:1,3 or **characterized in** comprising bismuth-tris(2-ethylhexanoate) and zinc-bis(2-ethylhexanoate) preferred in a number ratio of 1,3:1 to 1:1,3, or **characterized in** comprising sodium(2-ethylhexanoate) and zinc-bis(2-ethylhexanoate) preferred in a number ratio of 1,3:1 to 1:1,3.

4. A composition according to any one of the preceding claims, **characterized in** additionally comprising a cocatalyst, which is selected from a basic compound, particularly triethylamine.

5. A composition according to any one of the preceding claims, **characterized in that** prior to mixing with the catalyst, the at least one organosilicone compound and the at least one cross-linker on the basis of a silane compound having lactate groups were mixed and reacted with each other.

6. A composition according to claim 5, wherein the at least one organosilicone compound and the at least one cross-linker on the basis of a silane compound having lactate groups were mixed and reacted with each other under addition of a first catalyst, which is selected from an acid compound, in particular at least one 2-ethylhexylphosphate, and that the composition so-obtained was neutralized by addition of a basic compound, preferably triethylamine, prior to the mixing with the catalyst.

7. A composition according to any one of the preceding claims, **characterized in that** the organosilicone compound is an α,ω-dihydroxyl-terminated polyorganosiloxane compound, particularly an α,ω-dihydroxyl-terminated polydialkylsiloxane

8. A composition according to any one of the preceding claims, **characterized in that** the cross-linker comprises at least one compound, which is selected from the group consisting of methyl-tris(ethyllactato)silane, ethyl-tris(ethyllactato)silane, phenyl-tris(ethyllac-tato)silane, vinyl-tris(ethyllactato)silane, and tetra(ethyllactato)silane.

9. A composition according to any one of the preceding claims, **characterized in** comprising 40 to 90% by weight of the organosilicone compound, 1 to 15% by weight of the cross-linker, and 0.1 to 5.0% by weight of the catalyst.

10. A method for the production of a composition according to any one of the preceding claims **characterized in that**, in a first step, at least one organosilicone compound and at least one cross-linker on the basis of a silane compound having lactate groups are mixed and reacted with each other, preferably under addition of a first catalyst, which is selected from an acid compound, in particular at least one 2-ethylhexylphosphate, prior to mixing the so-obtained composition with a catalyst in a subsequent step, wherein the catalyst comprises a metal salt of a carboxylic acid, which is a zinc salt of one or more branched saturated carboxylic acids having six to nineteen carbon atoms, and a metal salt of a carboxylic acid, which is selected from a bismuth salt, a calcium salt, a potassium salt, a lithium salt, a magnesium salt, and a sodium salt, each of one or more branched saturated carboxylic acids having six to nineteen carbon atoms.

11. Use of a composition according to any one of claims 1 to 9 as a sealant, an adhesive, or a coating agent.

12. Use of a catalyst for cross-linking a silicone rubber material, in particular for cross-linking a silicone rubber material with lactate cross-linkers, wherein the catalyst comprises a metal salt of a carboxylic acid, which is a zinc salt of one or more branched saturated carboxylic acids having six to nineteen carbon atoms, and a metal salt of a carboxylic acid, which is selected from a bismuth salt, a calcium salt, a potassium salt, a lithium salt, a magnesium salt, and a sodium salt, each of one or more branched saturated carboxylic acids having six to nineteen carbon atoms.

13. Use according to claim 12, **characterized in that** the ratio of the number of zinc atoms of the zinc salt of a carboxylic acid to the number of the metal atoms of the metal salt of a carboxylic acid is from 2:1 to 1:2, preferred from 1,3:1 to 1:1,3.

## Revendications

1. Une composition comprenant
au moins un composé organosilicone,
au moins un agent de réticulation à base d'un composé silane comportant des groupes lactate, et
un catalyseur, dans lequel le catalyseur comprend un sel métallique d'un acide carboxylique, qui est un sel de zinc d'un ou plusieurs acides carboxyliques saturés ramifiés ayant de six à dix-neuf atomes de carbone, et un sel métallique d'un acide carboxylique, qui est choisi dans le groupe consistant en un sel de bismuth, un sel de calcium, un sel de potassium, un sel de lithium, un sel de magnésium et un sel de sodium, chacun d'un ou plusieurs acides carboxyliques saturés ramifiés ayant de six à dix-neuf atomes de carbone.

2. Composition selon la revendication 1, **caractérisée en ce que** le rapport du nombre d'atomes de zinc du sel de zinc d'un acide carboxylique au nombre d'atomes métalliques du sel métallique d'un acide carboxylique est de 2:1 à 1:2, préféré de 1,3:1 à 1:1,3.

3. Composition selon l'une quelconque des revendications précédentes, **caractérisée en ce qu'**elle comprend du bis (2-éthylhexanoate) de calcium et du bis (2-éthylhexanoate) de zinc, de préférence dans un rapport en nombre de 1,3:1 à 1:1,3 ou **caractérisé en ce qu'**elle comprend du tris (2-éthylhexanoate) de bismuth et du bis (2-éthylhexanoate) de zinc de préférence dans un rapport en nombre de 1,3:1 à 1:1,3, ou **caractérisé en ce qu'**elle comprend du (2-éthylhexanoate) de sodium et du bis (2-éthylhexanoate) de zinc de préférence dans un rapport en nombre de 1,3:1 à 1:1,3.

4. Composition selon l'une quelconque des revendications précédentes, **caractérisée en ce qu'**elle comprend en outre un co-catalyseur, qui est choisi parmi un composé basique, en particulier la triéthylamine.

5. Composition selon l'une quelconque des revendications précédentes, **caractérisée en ce qu'**avant le mélange avec le catalyseur, le au moins un composé organosilicone et le au moins un agent de réticulation à base d'un composé silane comportant des groupes lactate ont été mélangés et mis en réaction l'un avec l'autre.

6. Composition selon la revendication 5, **caractérisée en ce que** le au moins un composé organosilicone et le au moins un agent de réticulation à base d'un composé silane comportant des groupes lactate ont été mélangés et mis en réaction l'un avec l'autre par addition d'un premier catalyseur, qui est choisi parmi un composé acide, en particulier au moins un 2-éthylhexylphosphate, et que la composition ainsi obtenue a été neutralisée par addition d'un composé basique, de préférence la triéthylamine, avant le mélange avec le catalyseur.

7. Composition selon l'une quelconque des revendications précédentes, **caractérisée en ce que** le composé organosilicone est un composé polyorganosiloxane à terminaison α,ω-dihydroxyle, en particulier un polydialkylsiloxane à terminaison α,ω-dihydroxyle.

8. Composition selon l'une quelconque des revendications précédentes, **caractérisée en ce que** l'agent de réticulation comprend au moins un composé, choisi dans le groupe constitué par le méthyl-tris (éthyllactato) silane, l'éthyl-tris (éthyllactato) silane, le phényl-tris (éthyllactato) silane, le vinyl-tris (éthyllactato) silane et le tétra (éthyllactato) silane.

9. Composition selon l'une quelconque des revendications précédentes, **caractérisée en ce qu'**elle comprend 40 à 90% en poids du composé organosilicone, 1 à 15% en poids de l'agent de réticulation et 0,1 à 5,0% en poids du catalyseur.

10. Procédé de préparation d'une composition selon l'une quelconque des revendications précédentes, **caractérisé en ce que**, dans une première étape, au moins un composé organosilicone et au moins un agent de réticulation à base d'un composé silane comportant des groupes lactate sont mélangés et mis en réaction l'un avec l'autre, de préférence sous addition d'un premier catalyseur choisi parmi un composé acide, en particulier au moins un 2-éthylhexylphosphate, avant de mélanger la composition ainsi obtenue avec un catalyseur dans une étape ultérieure, dans laquelle le catalyseur comprend un sel métallique d'un acide carboxylique, qui est un sel de zinc d'un ou plusieurs acides carboxyliques saturés ramifiés ayant de six à dix-neuf atomes de carbone, et un sel métallique d'un acide carboxylique, qui est choisi parmi un sel de bismuth, un sel de calcium , un sel de potassium, un sel de lithium, un sel de magnésium et un sel de sodium, chacun d'un ou plusieurs acides carboxyliques saturés ramifiés ayant de six à dix-neuf atomes de carbone.

11. Utilisation d'une composition selon l'une des revendications 1 à 9 comme agent d'étanchéité, adhésif ou agent de revêtement.

12. Utilisation d'un catalyseur pour la réticulation d'un matériau de caoutchouc de silicone, en particulier pour la réticulation d'un matériau de caoutchouc de silicone avec des agents de réticulation au lactate, dans laquelle le catalyseur comprend un sel métallique d'un acide carboxylique, qui est un sel de zinc d'un ou plusieurs acides carboxyliques saturés ramifiés ayant de six à dix-neuf atomes de carbone et un sel métallique d'un acide carboxylique, qui est choisi parmi un sel de bismuth, un sel de calcium, un sel de potassium, un sel de lithium, un sel de magnésium et un sel de sodium, chacun d'un ou plusieurs acides carboxyliques saturés ramifiés ayant de six à dix-neuf atomes de carbone.

13. Utilisation selon la revendication 12, **caractérisé en ce que** le rapport du nombre d'atomes de zinc du sel de zinc d'un acide carboxylique au nombre d'atomes de métal du sel métallique d'un acide carboxylique est de 2:1 à 1:2, de préférence de 1,3:1 à 1:1,3.
